# EUROPEAN PATENT APPLICATION

(11) **EP 4 804 658 A1**
(43) Date of publication of application: **09.09.2026**
(21) Application number: 24896356.3
(22) Date of filing: 19.11.2024
(51) Int. Cl.: H04W 60/00

(54) **COMMUNICATION METHOD AND COMMUNICATION APPARATUS**

(30) Priority: 30.11.2023 CN 202311636440
(71) Applicant: Huawei Technologies Co., Ltd., Shenzhen, Guangdong 518129 (CN)
(72) Inventor: LI, Haoran, Shenzhen, Guangdong 518129 (CN); XU, Yishan, Shenzhen, Guangdong 518129 (CN); XU, Shengfeng, Shenzhen, Guangdong 518129 (CN)
(74) Representative: MERH-IP Matias Erny Reichl Hoffmann Patentanwälte PartG mbB
(86) International application number: PCT/CN2024/133040
(87) International publication number: WO 2025/113265

(57) **Abstract**

This application provides a communication method and a communication apparatus, to resolve a problem that user equipment (user equipment, UE) cannot simultaneously access a same network through two different 3rd generation partnership project (3rd generation partnership project, 3GPP) paths. The method includes: when the UE accesses the network by connecting to the first radio access network device and the first access and mobility management network element through the first path, the UE sends, to the second access network device, indication information indicating to select a different access and mobility management network element.

## Description

### CROSS-REFERENCE TO RELATED APPLICATIONS

This application claims priority to Chinese Patent Application No. 202311636440.1, filed with the China National Intellectual Property Administration on November 30, 2023, and entitled "Communication Method and Communication Device." The entire content of the priority application is incorporated herein by reference.

### Technical Field

The embodiments of this application relate to the communications field, and more specifically, to a communication method and a communications apparatus.

### Background Technology

The dual connectivity technology may be referred to as the dual steer (Dual Steer) technology. In a dual connectivity scenario, user equipment (user equipment, UE) may simultaneously access the same network through two connections of a 3rd Generation Partnership Project (3rd generation partnership project, 3GPP) access type. For example, the UE may use one subscriber identity module (subscriber identity module, SIM) card, and simultaneously access the same public land mobile network (public land mobile network, PLMN) through two different radio access networks (radio access network, RAN) of the 3GPP access type. The 3GPP access type corresponds to two paths, and both paths pass through an access and mobility management function (access and mobility management function, AMF).

Currently, in the scenario of dual connectivity, two different RANs in the two paths will select the same AMF to access the same network. However, when the AMF establishes a second path for the same UE, it will release the connection of the first path. As a result, it is not possible to achieve the effect of simultaneously accessing the network through two different paths of the 3GPP access type.

Therefore, how to enable the UE to simultaneously access the same network through two different paths in the scenario of dual connectivity is an urgent problem to be solved.

### INVENTION SUMMARY

This application provides a communication method and a communication apparatus, which can enable a UE to simultaneously access the same network through two different 3GPP paths, thereby improving the communication rate.

To achieve the above objective, this application adopts the following technical solutions:
According to a first aspect, a communication method is provided, and the method may be performed by a communications apparatus.

The method includes: accessing, by a communications apparatus, a network through a first path which connects a first radio access network device and a first access and mobility management network element; and; sending, by the communications apparatus, a request message to a second radio access network device, wherein the request message is used to request to register the communications apparatus with a network, the request message includes indication information, and the indication information is used by the second radio access network device to select a second access and mobility management network element different from the first access and mobility management network element; and The communications apparatus accesses the network through both the first path and the second path connecting the second radio access network device and the second access and mobility management network element.

It may be understood that in this application, the communications apparatus described in the first aspect and the following aspects may be a terminal device (for example, a mobile phone), or a chip (system) that may be disposed in the terminal device. In other words, the communication method according to the first aspect may be performed by a terminal device, or may be performed by a chip (system) in the terminal device.

In the communication method provided based on the first aspect, the communication apparatus sends, to the second radio access network device, indication information for selecting different access and mobility management network elements. This enables the second radio access network device to select, from among the different access and mobility management network elements, a different one to connect to the network. Alternatively, the indication information indicates that the communication apparatus supports simultaneous access to the network through two different paths, or indicates that the communication apparatus hopes to simultaneously access the network through two different paths. The two different paths are respectively connected to two different radio access network devices and two different access and mobility management network elements.

In a possible implementation, the indication information indicates that the communication apparatus supports simultaneous access to the network through two different paths, or indicates that the communication apparatus hopes to simultaneously access the network through two different paths. The two different paths are respectively connected to two different radio access network devices and two different access and mobility management network elements. Or, the indication information indicates that different access and mobility management network elements are to be selected. By enabling the second radio access network device to learn that the communication apparatus accesses the network through dual connectivity, the second radio access network device can select different access and mobility management network elements for the communication apparatus to access the network.

In a possible implementation, the indication information is a user subscription concealed identifier (Subscription Concealed Identifier, SUCI) of the communications apparatus. It can be understood that the SUCI can implicitly indicate that the communications apparatus supports simultaneous network access through two different paths, or implicitly indicate that the communications apparatus hopes to simultaneously access the network through two different paths. Alternatively, the SUCI may indicate the selection of different access and mobility management network elements. For example, the request message may be an access network (access network, AN) message. The AN parameters in the AN message include the SUCI and the identification information of the first access and mobility management network element. Therefore, the AN message received by the second radio access network device includes the SUCI and the identification information of the first access and mobility management network element. The second radio access network device may determine, based on the identification information of the first access and mobility management network element, that the communications apparatus is not performing initial registration, but has sent the SUCI. Therefore, it can be determined that the communications apparatus hopes to access the network through dual connectivity.

In one possible implementation, the request message is an access network (AN) message. The communication apparatus sends an AN message to a second radio access network device. The AN message is used to request registration of the communication apparatus with the network. The AN parameter in the AN message includes indication information. Since the access network parameter is a field that can be parsed by the radio access network device, the indication information can be obtained.

In another possible implementation, the communication apparatus sends indication information and identification information of a first access and mobility management network element to a second radio access network device. In this way, the second radio access network device learns that another access and mobility management network element different from the first access and mobility management network element is selected.

In one possible implementation, the communication apparatus receives the registration accept message from the first access and mobility management network element through the first path. The registration accept message includes identification information of the first access and mobility management network element.

In a possible implementation, before the communications apparatus sends the request message, the communications apparatus determines that it is desired to access the network simultaneously through two different paths. Further, the communications apparatus determines that it has already accessed the network through the first path, and therefore needs to register with the network through the second path. That is, the communications apparatus sends the request message to the second radio access network device.

In a possible implementation, the communications apparatus receives first information, where the first information is used to indicate a type of radio access technology (radio access technology, RAT) that is allowed to access the network by the communications apparatus. Further, the communications apparatus selects, based on the first information, a radio access network device corresponding to the type of RAT that is allowed to access the network, and registers with the network. That is, the communications apparatus sends the request message to the second radio access network device.

In a possible implementation, the RAT type corresponding to the second radio access network device is included in the RAT type allowed to access the network. It may be understood that the communications apparatus determines a proper RAT type based on the first information, and therefore selects the second radio access network device of the proper RAT type.

According to a second aspect, a communication method is provided. The method may be performed by a communications apparatus, or may be performed by a chip or a circuit of the communications apparatus. This is not limited in this application. For ease of description, the following provides description by using an example in which the communications apparatus performs the following operations.

The method includes: accessing, by a communications apparatus, a network through a first path which connects a first radio access network device and a first access and mobility management network element; and; sending, by the communications apparatus, a request message to the second access and mobility management network element by using the second radio access network device, wherein the request message is used to request to register the communications apparatus with the network, and the request message includes information used by the second access and mobility management network element to generate a context, of the communications apparatus, that is different from the first path; and The second access and mobility management network element is the same as or different from the first access and mobility management network element, and the communications apparatus accesses the network through both the first path and the second path connecting the second radio access network device and the second access and mobility management network element.

Based on the communication method provided in the second aspect, the communications apparatus sends, to the access and mobility management network element by using the communications apparatus, information used by the access and mobility management network element to generate a context of the communications apparatus that is different from the first path, where so that the access and mobility management network element creates a context of a new communications apparatus for the communications apparatus according to the information, so that when a same access and mobility management network element exists in the two paths, the access and mobility management network element separately retains, by using the two sets of communications apparatus contexts, two N2 connections corresponding to the two paths. Further, the communications apparatus may access a same network through two different paths for a same access and mobility management network element.

In a possible implementation, the communications apparatus sends a request message to the second access and mobility management network element by using the second radio access network device, where the request message is a registration request message. The registration request message includes information used by the access and mobility management network element to generate a context of a communications apparatus different from the first path. Because the registration request message is a field that can be parsed by the second access and mobility management network element, information used by the access and mobility management network element to generate a context of a communications apparatus different from that in the first path is obtained. Further, the second access and mobility management network element creates a new communications apparatus context for the communications apparatus. It should be noted that, when the second access and mobility management network element is the same as the first access and mobility management network element on the first path, the second access and mobility management network element retains the context of the communications apparatus for the first path, and creates the context of the communications apparatus for the second path. When the second access and mobility management network element is different from the first access and mobility management network element on the first path, the second access and mobility management network element may create the context of the communications apparatus.

In a possible implementation, the information used by the access and mobility management network element to generate a context of the communications apparatus different from the first path indicates that the communications apparatus supports simultaneous access to the network through two different paths, or indicates that the communications apparatus expects to simultaneously access the network through two different paths. Two different paths are separately connected to two different radio access network devices and two same or different access and mobility management network elements. Alternatively, the information used by the access and mobility management network element to create the context of the communications apparatus different from the first path instructs to create the context of the trusted apparatus.

In a possible implementation, the information used by the access and mobility management network element to generate the context of the communications apparatus that is different from the first path is the SUCI, that is, the identifier of the communications apparatus carried in the registration request message is the SUCI. It may be understood that although the communications apparatus herein has the 5G globally unique temporary identity (5G globally unique temporary identity, 5G-GUTI) allocated by the first access and mobility management network element, the identifier of the communications apparatus used in the registration request message sent by the communications apparatus is the SUCI, and the registration type may be initial registration. Therefore, the second access and mobility management network element cannot associate the context of the communications apparatus by using the identification information of the communications apparatus, that is, the SUCI, and the second access and mobility management network element considers, according to the SUCI, that the communications apparatus and the communications apparatus on the first path are different communications apparatuses. A second communication device context is thus created for the communication device.

In a possible implementation, the communication apparatus performs initial registration with a network by using the first SUCI through the first path, and performs registration with the network by using the second SUCI that is different from the first SUCI through the second path.

In another possible implementation, the communication apparatus performs non-initial registration with a network by using the first SUCI through the first path, and performs registration with the network by using the second SUCI that is different from the first SUCI through the second path. It should be noted that when the communication apparatus uses different SUCIs, the second access and mobility management network element considers, based on the different SUCIs, that the communication apparatus and the communication apparatus on the first path are not the same communication apparatus. It should be noted that the communication apparatus may encrypt a subscriber permanent identifier (subscriber permanent identifier, SUPI) to obtain an SUCI. For the same SUPI, the SUCI obtained each time by the communication apparatus through encryption is different. For example, the first SUCI is obtained through encryption once, and the second SUCI is obtained through encryption another time. Subsequently, the SUPI obtained after the first SUCI and the second SUCI are decrypted is the same.

In a possible implementation, before the communications apparatus sends the request message to the second radio access network device, the communications apparatus generates the second SUCI.

In a possible implementation, the communications apparatus generates the second SUCI based on information about the information that the communications apparatus expects to access a network through two different paths at the same time, where the two different paths are separately connected to two different radio access network devices and two same or different access and mobility management network elements.

In a possible implementation, before the communications apparatus sends the request message, the communications apparatus determines that it expects to access the network through two different paths at the same time. Further, the communications apparatus determines that the communications apparatus has accessed the network through the first path. Therefore, the communications apparatus needs to register with the network through the second path. In other words, the communications apparatus sends the request message to the second radio access network device.

In a possible implementation, the communications apparatus receives first information, where the first information is used to indicate a RAT type of a radio access technology that allows the communications apparatus to access a network. The communications apparatus selects, according to the first information, a radio access network device corresponding to a RAT type that is allowed to access the network to register with the network. The communications apparatus obtains the RAT type allowed by the network, and accesses the network by using the RAT type allowed to access the network. The network notifies the communications apparatus of the first information, so that the communications apparatus selects a proper RAT type from the first information for access, thereby avoiding the UE from selecting a RAT that cannot be accessed, and increasing an access success rate of the UE.

In a possible implementation, the RAT type corresponding to the second radio access network device is included in the RAT type allowed to access the network. It may be understood that the communications apparatus determines a proper RAT type based on the first information, and therefore selects the second radio access network device of the proper RAT type.

According to a third aspect, a communication method is provided. The method may be performed by a communications apparatus, or may be performed by a chip or a circuit of the communications apparatus. This is not limited in this application. For ease of description, the following provides description by using an example in which the communications apparatus performs the following operations.

The method includes: accessing, by a communications apparatus, a network through a first path connecting a first radio access network device and a first access and mobility management network element; and; sending, by the communications apparatus, a request message to the second access and mobility management network element by using the second radio access network device, where the request message is used to request to register the communications apparatus with the network, the request message includes indication information, and the indication information is used to retain the connection to the first path when the connection to the second path is established; and The second access and mobility management network element is the same as or different from the first access and mobility management network element, and the communications apparatus accesses the network through both the first path and the second path connecting the second radio access network device and the second access and mobility management network element.

In the communication method provided based on the third aspect, the indication information that retains the connection of the first path when the communication apparatus sends a connection for establishing the second path is sent to the access and mobility management network element. This enables the access and mobility management network element to retain the connection of the first path when establishing the connection of the second path for the communication apparatus. Thus, when two paths are connected to the same access and mobility management network element, the access and mobility management network element retains the connections of both paths. Consequently, the communication apparatus can access the same network through two different paths connected to the same access and mobility management network element.

In a possible implementation, the indication information indicates that the communication apparatus supports simultaneously accessing a network through two different paths, or indicates that the communication apparatus expects to simultaneously access a network through two different paths. The two different paths are respectively connected to two different radio access network devices and two same or different access and mobility management network elements. Alternatively, the indication information indicates that, in the case of establishing the connection of the second path, the connection of the first path is retained.

In a possible implementation, the registration request message includes a registration type. The indication information is a field within the registration type. For example, the field within the registration type is dual connectivity registration (DualSteer Registration). This can be understood as a new registration type being added. The name here is not limited, and the registration type is DualSteer Registration, which is used to indicate that the registration is for the communication apparatus to perform dual connectivity registration on a second path. That is, the value of the field in the registration type in the prior art is replaced with dual connectivity registration. This can minimize changes to the format of the existing request message, ensuring system compatibility.

In a possible implementation, before the communication apparatus sends the request message, the communication apparatus determines that it is desired to access the network simultaneously through two different paths. Further, the communication apparatus determines that it has already accessed the network through the first path, and therefore needs to register with the network through the second path. That is, the communication apparatus sends the request message to the second radio access network device.

In a possible implementation, the communication apparatus receives first information, where the first information is used to indicate a type of radio access technology RAT that is allowed to access the network by the communication apparatus. The communication apparatus selects, based on the first information, a radio access network device corresponding to the type of RAT that is allowed to access the network, and registers with the network. The communication apparatus obtains the type of RAT allowed by the network, and accesses the network through the type of RAT allowed to access the network. The network notifies the communication apparatus of the first information, so that the communication apparatus selects a suitable type of RAT from the first information for access, thereby avoiding a situation in which the UE selects a type of RAT that cannot be accessed, and increasing the success rate of the UE accessing the network.

In a possible implementation, the RAT type corresponding to the second radio access network device is included in the RAT type allowed to access the network. This may be understood as that the communication apparatus determines, based on the first information, a suitable type of RAT, and therefore selects the second radio access network device corresponding to the suitable type of RAT.

According to a fourth aspect, a communication method is provided. The method may be performed by an access and mobility management network element, or may also be performed by a chip or a circuit of the access and mobility management network element. This is not limited in this application. For ease of description, the following uses an example in which the method is performed by the access and mobility management network element to describe the method.

The method includes: establishing, by an access and mobility management network element, a connection to a communications apparatus through a first path to a first radio access network device; and;
receiving, by an access and mobility management network element, a request message from a communications apparatus through a second path to a second radio access network device, where the request message is used to request to register the communications apparatus with a network, and the request message includes indication information; and; The access and mobility management network element retains the connection on the first path according to the indication information when registering with the network through the second path.

In a possible implementation, the access and mobility management network element determines, based on the indication information, that the communications apparatus supports simultaneous access to the network through two different paths, or determines that the communications apparatus expects to simultaneously access the network through two different paths. so as to retain that connection of the first path in the event of registering to the network through the second path.

In a possible implementation, the access and mobility management network element obtains first information, where the first information indicates a radio access technology RAT type that the communications apparatus allows to access a network.

In a possible implementation, the access and mobility management network element receives the first information from the unified data management network element or the policy control network element.

In a possible implementation, the first information does not include the RAT type corresponding to the second radio access network device, and the method further includes: sending, by the access and mobility management network element, a registration rejection message to the communications apparatus by using the second radio access network device, where the registration rejection message includes the first information.

In a possible implementation, the access and mobility management network element determines whether the first information includes a combination of a RAT type corresponding to the first radio access network device and a RAT type corresponding to the second radio access network device. The network selects a suitable RAT type combination for the communication device, thereby improving the network quality and stability, for example, selects a combination of a terrestrial network (TN) and a non-terrestrial network (NTN) for the communication device, When the communications apparatus accesses the network through two paths of TN and NTN, network quality can be ensured by using TN, and network coverage can be ensured by using NTN.

In a possible implementation, the first information includes a combination of a RAT type corresponding to the first radio access network device and a RAT type corresponding to the second radio access network device, and the method further includes: sending, by the access and mobility management network element, a registration accept message to the communications apparatus. It can be understood as the

In a possible implementation, the first information does not include a combination of a RAT type corresponding to the first radio access network device and a RAT type corresponding to the second radio access network device, and the method further includes: sending, by the access and mobility management network element, a registration rejection message to the communications apparatus by using the second radio access network device, where the registration rejection message includes the first information; and; Alternatively, the access and mobility management network element sends a registration accept message to the communications apparatus by using the second radio access network device, and releases the connection to the first path. For example, the RAT types of the first path and the second path are the same, but one of the first path and the second path is retained according to the first information. Therefore, the second path is retained and the first path is released.

For beneficial effects of the fourth aspect and some implementations of the fourth aspect, refer to the related description of the third aspect. Details are not described herein again.

According to a fifth aspect, a communication method is provided. The method may be performed by a radio access network device, or may be performed by a chip or a circuit of the radio access network device. This is not limited in this application. For ease of description, the following uses an example in which the radio access network device performs.

The method includes: receiving, by a radio access network device, a request message from a communications apparatus, where the request message is used to request to register the communications apparatus with a network, and the request message includes indication information; obtaining, by a radio access network device, identification information of a first access and mobility management network element; and; The radio access network device selects, based on the identification information and indication information of the first access and mobility management network element, a second access and mobility management network element different from the first access and mobility management network element.

In a possible implementation, the request message includes an access network parameter, and the access network parameter includes indication information.

In a possible implementation, the identification information of the first access and mobility management network element is obtained from a request message.

For beneficial effects of the fifth aspect and some implementations of the fifth aspect, correspondingly refer to the related description of the first aspect. Details are not described herein again.

According to a sixth aspect, a communication method is provided. The method may be performed by a radio access network device, or may be performed by a chip or a circuit of the radio access network device. This is not limited in this application. For ease of description, the following uses an example in which the radio access network device performs.

The method includes: receiving, by a radio access network device, a request message from a communications apparatus, where the request message is used to request to register the communications apparatus with a network, the request message includes indication information, and the indication information indicates that the communications apparatus supports simultaneous network access through two different paths; or indicating that the communication device desires to access the network simultaneously through two different paths; The radio access network device selects, according to the indication information, an access and mobility management network element that supports dual connectivity, where the access and mobility management network element that supports dual connectivity is that the access and mobility management network element supports simultaneous maintenance of a connection to the communications apparatus through two different paths.

In a possible implementation, the request message includes an access network parameter, where the access network parameter includes indication information.

In a possible implementation, the method further includes: when the first access and mobility management network element does not support dual connectivity, the radio access network device determines, based on the identification information of the first access and mobility management network element, whether the first access and mobility management network element supports dual connectivity. The radio access network device selects, based on the indication information, a second access and mobility management network element that supports dual connectivity to access the network, including: when the first access and mobility management network element supports dual connectivity, the radio access network device selects the first access and mobility management network element to access the network.

In a possible implementation, the method further includes: when the first access and mobility management network element does not support dual connectivity, the radio access network device selects, from network elements other than the first access and mobility management network element, a second access and mobility management network element to access the network. The beneficial effects of the sixth aspect and some implementations of the sixth aspect may be correspondingly referred to the descriptions related to the third aspect, and details are not described herein again.

According to the seventh aspect, a communication method is provided. This method may be executed by a first network element, or it may also be executed by a chip or circuit of the first network element. This application does not impose any limitations on this. For ease of description, the following uses an example in which the first network element performs the method for description.

The method includes: The first network element obtains indication information, where the indication information indicates that the communication apparatus supports simultaneous access to the network through two different paths. The first network element determines, based on the indication information, the first information of the communication apparatus, where the first information indicates that the communication apparatus is allowed to access the network using a radio access technology (RAT) type. The first network element sends the first information to an access and mobility management network element.

Based on the communication method provided in the seventh aspect, the first network element notifies the communication apparatus of the first information, so that the communication apparatus selects a suitable RAT type from the first information to access the network, thereby avoiding a situation in which the UE selects an RAT that cannot be accessed, and increasing the success rate of the UE accessing the network.

In a possible implementation, the first network element receives indication information from an access and mobility management network element; or the first network element obtains the indication information based on subscription data of the communication apparatus. For example, the subscription data of the communication apparatus includes the indication information, or the subscription data indicates that the communication apparatus supports dual connectivity.

In a possible implementation, the first network element is a unified data management network element or a policy control network element.

According to the ninth aspect, a communications apparatus is provided. The communications apparatus includes: a module configured to perform any communication method performed by the terminal apparatus described in the foregoing description, such as a transceiver module and a processing module. The transceiver module is configured to perform corresponding message sending and receiving actions, and the processing module may be configured to perform all actions except sending and receiving information.

Optionally, the communications apparatus according to the eighth aspect may further include a storage module. The storage module stores a program or instructions. When the processing module executes the program or instructions, the communications apparatus can perform any communication method performed by the terminal apparatus described in the foregoing description.

According to the ninth aspect, a communications apparatus is provided. The communications apparatus includes: a module configured to perform any communication method described in the foregoing description and performed by the access and mobility management network element. The module includes, for example, a transceiver module and a processing module. The transceiver module is configured to perform corresponding message sending and receiving actions, and the processing module may be configured to perform all actions except sending and receiving information.

Optionally, the communications apparatus according to the ninth aspect may further include a storage module, and the storage module stores a program or an instruction. When the processing module executes the program or the instruction, the communications apparatus can perform any communication method performed by the access and mobility management network element in the foregoing description.

According to a tenth aspect, a communications apparatus is provided. The communications apparatus includes a module, such as a transceiver module and a processing module, configured to perform any communication method performed by the radio access network device in the foregoing description. The transceiver module is configured to perform a corresponding message sending and receiving action, and the processing module may be configured to perform all actions except information receiving and sending.

Optionally, the communications apparatus according to the tenth aspect may further include a storage module, and the storage module stores a program or an instruction. When the processing module executes the program or the instruction, the communications apparatus can perform any communication method performed by the radio access network device in the foregoing description.

According to an eleventh aspect, a communications apparatus is provided. The communications apparatus includes a processor, and the processor is configured to execute the instruction stored in the memory, so that the communications apparatus performs any communication method in the foregoing description.

In a possible design solution, the communications apparatus may further include the memory. The memory may be integrated with the processor, or may be disposed separately.

According to a twelfth aspect, a communications apparatus is provided. The communications apparatus includes a processor, and the processor is configured to execute the instruction stored in the memory, so that the communications apparatus performs any communication method performed by the access and mobility management network element in the foregoing description.

In a possible design solution, the communications apparatus may further include the memory. The memory may be integrated with the processor, or may be disposed separately.

According to a thirteenth aspect, a communications apparatus is provided. The communications apparatus includes a processor, and the processor is configured to execute the instruction stored in the memory, so that the communications apparatus performs any communication method performed by the radio access network device in the foregoing description.

In a possible design solution, the communications apparatus may further include the memory. The memory may be integrated with the processor, or may be disposed separately.

According to the fourteenth aspect, a communications system is provided, comprising: a communications apparatus, where the communications apparatus is configured to perform the method in any one of the first aspect to the third aspect and the possible implementations thereof.

Optionally, the communications system further includes an access and mobility management network element, where the access and mobility management network element is configured to perform the method in any one of the fourth aspect and the possible implementations thereof.

Optionally, the communications system further includes a radio access network device, where the radio access network device is configured to perform the method in any one of the fifth aspect and the sixth aspect and the possible implementations thereof.

Optionally, the communications system further includes a unified data management network element or a policy control network element, where the unified data management network element or the policy control network element is configured to perform the method in any one of the seventh aspect and the possible implementations thereof.

Optionally, the communications system further includes a unified data management network element or a policy control network element, where the unified data management network element or the policy control network element is configured to perform the method in any one of the seventh aspect and the possible implementations thereof.

According to the sixteenth aspect, a chip is provided, including at least one processor. The at least one processor is coupled to a memory. The memory is configured to store a computer program. The processor is configured to invoke the computer program from the memory and run the computer program, so that an apparatus in which the chip system is installed performs the method according to any one of the first aspect to the seventh aspect and any one of the possible implementations thereof.

Among them, the chip may include an input circuit or interface configured to send information or data, and an output circuit or interface configured to receive information or data.

According to the seventeenth aspect, a computer program product is provided. The computer program product includes computer program code. When the computer program code runs on a computer, the method according to any one of the first aspect to the seventh aspect and any one of the possible implementations thereof is performed.

### Brief Description of the Drawings

FIG. 1 is a schematic diagram of a communications system according to an embodiment of this application.
Figure 2 is a schematic diagram of a registration procedure under a 3GPP access technology, as provided by an embodiment of this application.
Figure 3 is a schematic diagram of the structure of a globally unique temporary identifier, as provided by an embodiment of this application.
Figure 4 is a schematic diagram of a dual connectivity architecture, as provided by an embodiment of this application.
Figure 5 is a schematic diagram of the procedure of a communication method 500, as provided by an embodiment of this application.
Figure 6 is a schematic diagram of the procedure of a communication method 600, as provided by an embodiment of this application.
FIG. 7 is a schematic flowchart of a communication method 700 according to an embodiment of this application.
FIG. 8 is a schematic flowchart of a communication method 800 according to an embodiment of this application.
FIG. 9 is a schematic flowchart of a communication method 900 according to an embodiment of this application.
FIG. 10 is a schematic flowchart of a communication method 1000 according to an embodiment of this application.
FIG. 11 is a schematic flowchart of a communication method 1100 according to an embodiment of this application.
Figure 12 is a schematic flowchart of a communication method 1200 according to an embodiment of this application.
Figure 13 is a schematic flowchart of a communication method 1300 according to an embodiment of this application.
Figure 14 is a schematic flowchart of a communication method 1400 according to an embodiment of this application.
Figure 15 is a schematic structural diagram of a communication apparatus 1000 according to an embodiment of this application.
Figure 16 is a schematic structural diagram of a communication apparatus 2000 according to an embodiment of this application.
FIG. 17 is a schematic structural diagram of a chip system 3000 according to an embodiment of this application.

### Specific Implementation Manner

The following describes the technical solutions in this application with reference to the accompanying drawings.

The technical solutions provided in this application can be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application can also be applied to device-to-device (device to device, D2D) communication, vehicle-to-everything (vehicle-to-everything, V2X) communication, machine-to-machine (machine to machine, M2M) communication, machine type communication (machine type communication, MTC), and an internet of things (internet of things, IoT) communication system or another communication system.

In a communications system, the portion operated by the operator can be referred to as a public land mobile network (public land mobile network, PLMN), or it can also be referred to as an operator network, etc. The PLMN is a network established and operated by the government or its approved operators, with the purpose of providing the public with land mobile communications services. It is primarily a public network where mobile network operators (mobile network operator, MNO) provide users with mobile broadband access services. The PLMN described in the embodiments of this application can specifically be a network that meets the requirements of the 3rd Generation Partnership Project (3rd generation partnership project, 3GPP) standards, and is referred to as a 3GPP network. The 3GPP network typically includes, but is not limited to, a 5th generation mobile communications (5th-generation, 5G) network, a 4th generation mobile communications (4th-generation, 4G) network, and other future communication systems, such as a 6th generation mobile communications (6th-generation, 6G) network, etc.

For ease of description, a PLMN or a 5G network is used as an example for description in this embodiment of this application.

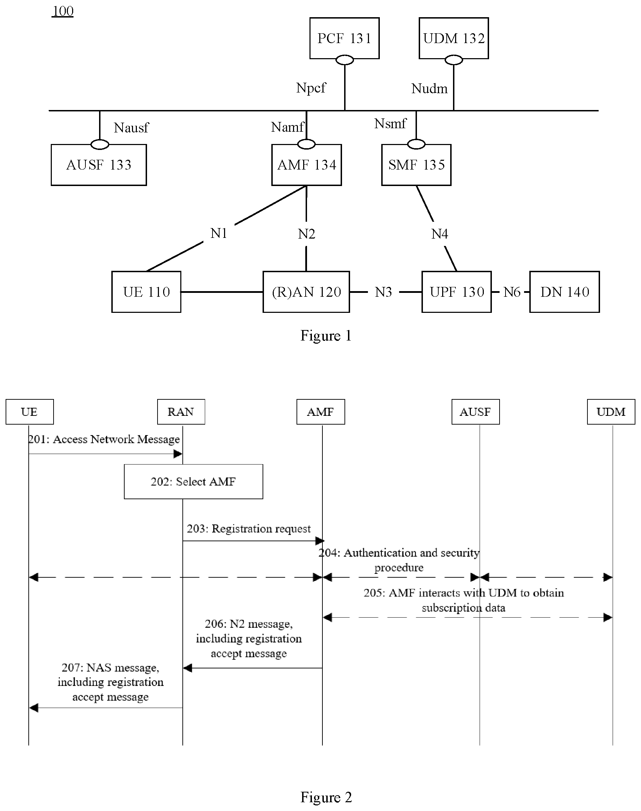

FIG. 1 is a schematic diagram of a network architecture. A 5G network architecture based on a service-based architecture (service-based architecture, SBA) in a non-roaming scenario defined in a 3GPP standardization process is used as an example. As shown in FIG. 1, the network architecture may include a terminal device part, a data network (data network, DN) part, and an operator network PLMN part. The operator network PLMN part may include but is not limited to a (radio) access network ((radio) access network, (R)AN) 120 and a core network (core network, CN) part.

The following briefly describes the functions of the network elements of each part.

The terminal device part may include a UE 110, where the UE 110 is a device that provides voice and/or data connectivity to a user. The UE 110 may also be referred to as user equipment UE. The UE 110 in this application is a device with a radio transceiver function, and may communicate with one or more CN devices by using an access network device (or may also be referred to as an access device) in the (radio) access network (R)AN 120. The UE 110 may also be referred to as an access terminal, a terminal, a subscriber unit, a subscriber station, a mobile station, a mobile station, a remote station, a remote terminal, a mobile device, a user terminal, a user agent, a user apparatus, or the like. The UE 110 may be deployed on land, including indoors or outdoors, handheld, or vehicle-mounted. It can also be deployed on the water surface (e.g., a ship). It can also be deployed in the air (e.g., on aircraft, balloons, satellites, etc.). The UE 110 may be a cellular phone, a cordless phone, a session initiation protocol (SIP) phone, a smart phone, a mobile phone, a wireless local loop (WLL) station, a personal digital assistant (PDA), or the like. Alternatively, the UE 110 may be a handheld device with a wireless communication function, a computing device, or another device connected to a wireless modem, an in-vehicle device, a wearable device, an unmanned aerial vehicle device, or a terminal in the Internet of Things, the Internet of Vehicles, a 5G network, or a terminal in any form in a future network, or a relay user A device or a terminal in a future evolved 6G network. For example, the relay user equipment may be a 5G home gateway (residential gateway, RG). For example, the UE 110 may be a virtual reality (virtual reality, VR) terminal, an augmented reality (augmented reality), (AR) terminals, wireless terminals in industrial control, wireless terminals in driverless, wireless terminals in telemedicine, wireless terminals in smart grids, wireless terminals in transportation security, wireless terminals in smart cities, and wireless terminals in smart homes. The terminal device herein refers to a 3GPP terminal. A type, a type, or the like of the terminal device is not limited in this embodiment of this application. For ease of description, an example in which UE refers to a terminal device is used for description in this application.

The (R)AN 120 may include one or more access network elements or access network devices, and an interface between the access network device and the terminal device may be a Uu interface (or referred to as an air interface, that is, a message exchanged between the access network device and the terminal device may be referred to as an air interface message). Certainly, in future communication, the interface name may remain unchanged, or may be replaced by another name. This is not limited in this application. The (R)AN 120 is a device that provides a wireless communication function for the UE 110, and may connect the terminal device to a node or a device in a wireless network, or may be referred to as a network device. The (R)AN 120 may be considered as a sub-network of the operator network, and is an implementation system between the service node and the UE 110 in the operator network. For example, the UE 110 may be connected to a service node in an operator network by using the (R)AN 120, so as to obtain a service provided by the service node. The (R)AN 120 includes but is not limited to a next generation node base station node (next generation node base station, gNB) in a 5G system, and an evolved node B (evolved node B) in a long term evolution (long term evolution, LTE). eNB), a radio network controller (RNC), a node B (node B, NB), a base station controller (base station controller, BSC), a base transceiver station (base transceiver station, BTS), and a home base station (for example, home evolved nodeB, or home nodeB, HNB), a base band unit (base band unit, BBU), a transmission and receiving point (transmitting and receiving point, TRP), a transmission point (transmitting point, TP), a small cell device, a mobile switching center, a network device in a future network, or the like. The access network device may also be a module or a unit that implements a function of a base station, for example, including a centralized unit (central unit, CU) and a distributed unit (distributed unit, DU). In a possible network structure, the CU may be configured to support radio resource control (radio resource control, RRC), a packet data convergence protocol (packet data convergence protocol, PDCP), and a service data adaptation protocol (service data adaptation protocol). Communication under protocols such as SDAP) The DU may be configured to support communication under a radio link control (radio link control, RLC) layer protocol, a medium access control (medium access control, MAC) layer protocol, and a physical layer protocol. A specific technology and a specific device form used by the access network device are not limited in this embodiment of this application. In systems that use different radio access technologies, names of devices having an access network device function may be different. For ease of description, in all the embodiments of this application, the foregoing apparatuses that provide a wireless communication function for the UE 110 are collectively referred to as an access network device or a RAN for short. It should be understood that a specific type of the access network device is not limited in this specification.

The CN part may include but is not limited to the following network functions (network function, NF): user plane function (user plane function, UPF) 130, policy control function (policy control function, PCF) 131, unified data management function (unified data management, UDM) 132, authentication server function (authentication server function, AUSF) 133, access and mobility management function (access and mobility management function, AMF) 134, session management function (session management function, SMF) 135.

The data network DN 140 is usually a network located outside a carrier network, for example, a third-party network or an Internet service.

The following further briefly describes the NF functions included in the CN.
1. The UPF 130 is a gateway provided by an operator, and is a gateway for communication between the operator network and the DN 140. The UPF 130 network function includes user plane-related functions such as data packet routing and transmission, data packet detection, service usage reporting, quality of service (quality of service, QoS) processing, uplink data packet detection, and downlink data packet storage. In the future communications system, the user plane function network element may still be a UPF network element, or may have another name. This is not limited in this application.
2. The PCF 131 is a control plane function provided by an operator, mainly supports providing a unified policy framework to control network behavior, provides a policy rule for the control layer network function, and is responsible for obtaining user subscription information related to policy decision. For example, the PCF 133 may be divided into two types of PCFs with different functions: a UE-PCF and an AMF-PCF. The UE-PCF may be configured to generate a UE policy (UE policy), that is, a policy sent to the UE 110. A sending path is UE-PCF--->AMF--->UE. In this case, the AMF 134 does not parse content of the UE policy, that is, the AMF 134 transparently transmits the UE policy. The AM-PCF may be configured to generate an AM policy, that is, a policy used for access management that is sent to the AMF 134. A sending path is: UE-PCF--->AMF. Further, the AMF 134 may further send a part or all of the access management policy to the RAN 120. In the future communications system, the policy control function network element may still be a PCF network element, or may have another name. This is not limited in this application.
3. UDM 132 is a control plane function provided by an operator. It is responsible for storing information such as the subscriber permanent identifier (SUPI) of subscribers who have subscribed to the operator's network, the public subscription identifier (GPSI) for public use by subscribers, and credentials. During transmission, the SUPI is first encrypted, and the encrypted SUPI is referred to as a hidden subscription concealed identifier (SUCI). The information stored by the UDM network function 132 can be used for authentication and authorization when UE 110 accesses the operator's network. Specifically, the subscribers of the operator's network mentioned above can be users who use the services provided by the operator's network. For example, users using a SIM card of China Telecom, or users using a SIM card of China Mobile, etc. The credential of the above-mentioned subscribers can be a small file saved in the mobile phone chip card, such as a long-term key or information related to encryption of the mobile phone chip card, which is used for authentication and/or authorization. In future communication systems, the unified data management function network element may still be a UDM network element, or may have another name. This application does not impose any limitation.
4. AUSF 133 is a control plane function provided by an operator, typically used for level-1 authentication, i.e., the authentication between the terminal device 110 (a subscribed user) and the operator network. After receiving an authentication request initiated by the subscribed user, the AUSF network function 133 may authenticate and/or authorize the subscribed user based on the authentication information and/or authorization information stored in the UDM network function 132, or may generate the authentication and/or authorization information of the subscribed user through the UDM network function 132. The AUSF network function 133 may provide feedback of the authentication information and/or authorization information to the subscribed user. In future communication systems, the authentication server function network element may still be an AUSF network element, or may have another name. This application does not impose any limitation.
5. AMF 134 is a control plane network function provided by an operator network, responsible for access control and mobility management for UE 110 accessing the operator network. For example, it includes functions such as mobile state management, assigning a temporary identity identifier to a user, and authenticating and authorizing users. In future communication systems, the access management network element may still be an AMF network element, or may have another name. This application does not impose any limitation.
6. SMF 135 is a control plane network function provided by an operator network. It is responsible for managing the protocol data unit (PDU) session of the UE 110 (including session establishment, modification, and release). It is also used for the selection and reselection of user plane function network elements, the allocation of the internet protocol (IP) address of the terminal device, quality of service (QoS) control, and other session-related functions. In future communication systems, the session management function network element may still be an SMF network element, or it may have another name. This application does not impose any limitations.

It can be understood that the foregoing network element or function may be a physical entity in a hardware device, or may be a software instance running on dedicated hardware, or may be a virtualized function instantiated on a shared platform (for example, a cloud platform). In short, an NF can be implemented by hardware or by software.

In Figure 1, Npcf, Nudm, Nausf, Namf, Nsmf, N1, N2, N3, N4, and N6 are interface sequence numbers. For example, the meanings of the above interface sequence numbers can be referred to the meanings defined in the 3GPP standard protocol. This application does not impose any limitation on the meanings of the above interface sequence numbers. It should be noted that the names of the interfaces between the various network functions in Figure 1 are merely examples. In specific implementation, the names of the interfaces of the system architecture may also be other names. This application does not impose any limitation on this. In addition, the names of the messages (or signaling) transmitted between the various network elements are also merely examples, and do not impose any limitation on the functions of the messages themselves.

It should be noted that in the architecture shown in Figure 1, the interface between the radio access network and the 5G core network is referred to as the NG interface (not shown in the figure). The gNBs are connected to each other through the Xn interface. The gNB and the 5GC are connected through the NG interface. Among them, the NG interface includes the NG-C interface and the NG-U interface. The NG-C interface is a control plane interface, connecting the gNB and the AMF, and transmitting control plane data. The NG-U interface is a user plane interface, connecting the gNB and the UPF, and transmitting user plane data. The main functions of the NG interface include but are not limited to: paging, UE context connection, UE mobility management, PDU session management, NAS signaling transmission, etc.

It should be understood that the network architecture 100 described above is merely a network architecture described from the perspective of a service-based architecture. In this service-based architecture, the PLMN may, according to the requirements of specific scenarios, orderly and as needed combine some or all of the network functions, thereby achieving the customization of network capabilities and services. This allows for the deployment of dedicated networks for different services, that is, the implementation of 5G network slicing (network slicing). The network slicing technology enables operators to respond more flexibly and quickly to customer needs, and supports flexible allocation of network resources.

For ease of description, network functions (such as the UPF 130...SMF 135) are collectively referred to as/shortly referred to as an NF in the embodiments of this application. In other words, the NF described below in the embodiments of this application may be replaced with any network function. In addition, the UE 110 is referred to as UE in this embodiment of this application, that is, all UE described in the following embodiments of this application may be replaced with a terminal device. FIG. 1 schematically describes only some network functions, and the NF described later is not limited to the network functions shown in FIG. 1.

It should be understood that the AMF, the SMF, the UPF, the AUSF, the PCF, and the UDM shown in FIG. 1 may be understood as network elements in a core network configured to implement different functions, for example, may be combined as required to form a network slice. The core network network elements may be independent devices of each other, or may be integrated into a same device to implement different functions. A specific form of the foregoing network elements is not limited in this application.

It should be further understood that the foregoing names are defined only for the convenience of distinguishing different functions, and shall not constitute any limitation on this application. This application does not exclude a possibility that another name is used in the 5G network and another future network. For example, in the 6G network, some or all of the foregoing network elements may use 5G terms, or may use other names or the like.

To facilitate understanding of the embodiments of this application, the following describes some terms in the embodiments of this application, so as to facilitate understanding by a person skilled in the art.
1) Access type and access technology:
   Access types are classified into 3GPP access types and non-3GPP access types.

The 3GPP access type includes but is not limited to the following access technologies: an LTE access technology (corresponding to a 4G cellular network), an NR access technology (corresponding to a 5G cellular network), a satellite access technology defined by the 3GPP, or a subsequent evolved cellular access technology. Satellite access technologies defined by 3GPP can be further divided into low-orbit satellites, medium-orbit satellites, and synchronous satellites. The 3GPP access network means that an access type of the access network is a 3GPP access type (the access type may also be referred to as an access mode).

The non-3GPP access type includes but is not limited to the following access technologies: untrusted non-3GPP access (untrusted non-3GPP access) technology (For example, access the core network through a radio access node purchased by an individual.) 2. Trusted non-3GPP access technology (For example, access to the core network through a radio access node deployed by an operator) 2. Wireline access technology (e.g. Broadband Forum (BBF) an access technology, a wired-cable access technology, and the like), an IEEE 802.11 access technology, and a non-3GPP access technology connected by a standalone non-public network (SNPN). For example, an access manner in which a non-3GPP access technology is used may include a wired access manner, a wireless fidelity (Wireless Fidelity, WiFi), a Bluetooth access manner, and a ZigBee (ZigBee) access manner. A non-3GPP access network means that the access type of the access network is a non-3GPP access type.

2) A process of determining the access type and access technology.

When a UE performs a registration procedure, it sends an AN message to the access network device.

Access network devices can be 3GPP access network devices (e.g., RAN) or non-3GPP access network devices. For example, non-3GPP access network devices include: non-3GPP interworking function (non-3GPP interworking function, N3IWF) network element, trusted non-3GPP gateway function (trusted non-3GPP gateway function, TNGF) network element, trusted WLAN interworking function (trusted WLAN interworking function, TWIF) network element, or wired access gateway function (wireline access gateway function, W-AGF) network element. W-AGF can also be referred to as AGF.

The access network device sends the registration request message to the AMF. After the AMF receives the registration request message, the AMF may determine, based on the information about the access network device, the access type and the access technology with which the UE is registered.

In an example, the AMF determines, based on the access network device, the access type with which the UE is registered. For example, if the registration request message is sent or forwarded by the 3GPP access network device (for example, a RAN), the AMF may determine that the access type with which the UE is registered is the 3GPP access type. For another example, if the registration request message is sent or forwarded by a non-3GPP access network device, for example, the registration request message is sent by an N3IWF, a TNGF, a TWIF, a W-AGF, or the like, In this case, the AMF may determine that the access type used by the UE is the non-3GPP access type.

In another example, the AMF may further determine the access technology with which the UE registers. For example, for the 3GPP access type, the AMF may further determine, based on radio access network device information, for example, global radio access network node identifiers (Global RAN Node IDs) associated with the N2 interface and a tracking area (tracking area) indicated by the radio access network device, that the access technology is L TE access technologies, NR access technologies, and satellite access technologies. For another example, when the 5G access network node has a global N3IWF node identifier (Global N3IWF Node ID), the access technology is untrusted non-3GPP. When the 5G access network node has a global TNGF node identifier (Global TNGF Node ID) or a global TWIF node identifier (Global TWIF Node ID), the access technology is a trusted non-3GPP or the like.

In a multi-connection scenario, after the UE undergoes multiple registrations, the access type registered by the UE can be one or more types. For example, in a dual connectivity scenario, the UE may register twice using the 3GPP access type. In this case, the access type registered by the UE is the 3GPP access type. Another example is that the UE may register for the first time using the 3GPP access type and for the second time using a non-3GPP access type. In this case, the access type registered by the UE is the 3GPP access type and the non-3GPP access type.

3) Registration procedure, including but not limited to: the registration procedure under the 3GPP access technology, the registration procedure under the untrusted non-3GPP access technology, the registration procedure under the trusted non-3GPP access technology, and the registration procedure under the wired access technology.

When the UE accesses the network for the first time, the UE initiates an initial registration (Initial Registration) procedure. In addition, the UE may also initiate other types of registration. For example, when the UE needs to initiate a registration procedure due to movement, the UE initiates a mobility registration update (Mobility Registration Update) procedure. When the UE is in a registered state and initiates a registration procedure due to the expiration of the periodic registration update timer, the UE initiates a periodic registration update (Periodic Registration Update) procedure. When the UE is in a service-restricted state and initiates a registration procedure, the UE initiates an emergency registration (Emergency Registration) procedure.

The following first uses an initial registration procedure as an example for description.

As shown in Figure 2, a possible registration procedure of UE in a 3GPP access technology in the current technology is described.

Step 201: UE sends an access network (access network, AN) message to a RAN.

Among them, the AN message includes an AN parameter and a registration request message (Registration Request). The AN parameter includes parameter information used by the RAN to select an AMF. For example, the parameter information may include one or more of the following: PLMN identifier, network identifier (network identification, NID), etc. The registration request message includes a registration type (Registration Type), a UE identifier, etc. The registration type may be an initial registration. The UE identifier may be an SUCI.

Step 202: The RAN selects an AMF based on the AN parameter.

This AN parameter is the AN parameter in the AN message received in step 201.

Step 203: The RAN sends the registration request message received in step 201 to the AMF selected in step 202.

Step 204: The UE, AMF, AUSF, UDM, and the like interact to perform an authentication and security procedure.

For example, first, the AMF selects the AUSF, and sends an authentication request message to the AUSF. The AUSF performs an authentication procedure on the UE, and obtains authentication data or information used for authentication from the UDM. After the authentication is completed, the AUSF sends a security anchor functionality (security anchor functionality, SEAF) key to the AMF. The AMF may derive and obtain a NAS security key based on the SEAF key.

Then, the AMF indicates to the UE that the authentication is successful. For example, the AMF sends a NAS security mode command (NAS Security Mode Command) to the UE, to activate NAS security. The NAS Security Mode Command includes an EAP success indication (EAP-Success), indicating that the EAP authentication and key agreement (EAP- authentication and key agreement, EAP-AKA') performed by the core network is successful. The RAN forwards the NAS security mode command sent by the AMF to the UE, and sends the NAS security mode complete (NAS Security Mode Complete) message sent by the UE to the AMF.

After the authentication succeeds, the AMF creates a UE context, where the UE context includes information about the N2 connection between the RAN and the AMF for the UE.

Step 205: The AMF interacts with the UDM to obtain the subscription data of the UE.

The AMF may obtain related service information based on the subscription data of the UE, for example, the service level, service traffic limit, and service fee of the UE. The information may be used to control service access and restriction of the UE, charging, settlement, and the like.

Step 206: The AMF allocates a 5G-GUTI to the UE, and sends a NAS registration accept (NAS Registration Accept) message to the RAN.

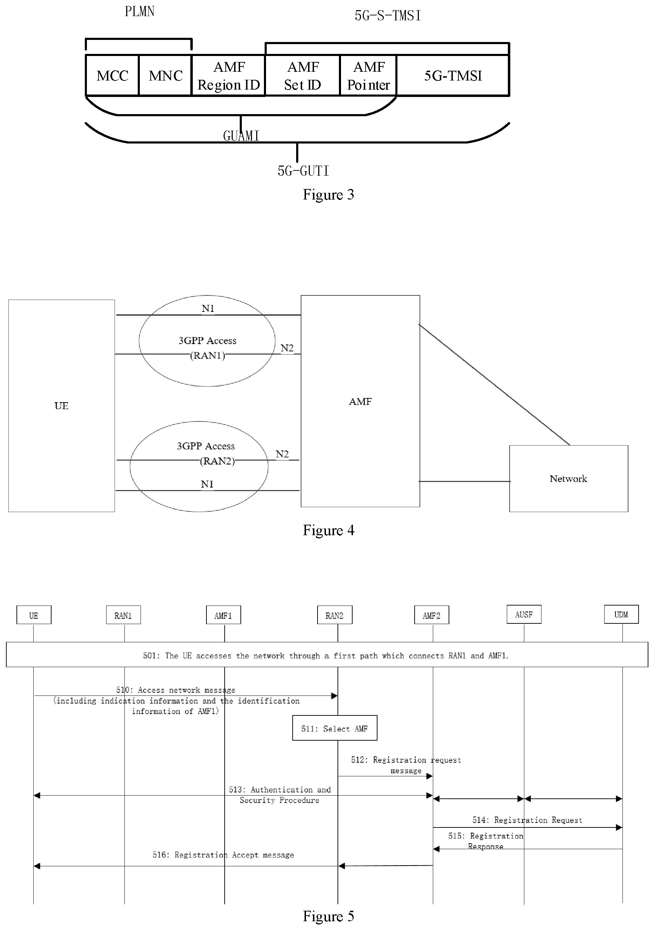

The 5G-GUTI is a UE identifier, and may also be understood as a temporary identity of the UE. An AMF serving the UE allocates the 5G-GUTI to the UE. 5G-GUTI can be used in subsequent registration or session establishment procedures. The NAS registration accept message includes the 5G-GUTI. For example, as shown in FIG. 3, the 5G-GUTI includes two parts: a globally unique AMF identifier (globally unique AMF identifier, GUAMI) and a 5G temporary mobile subscriber identity (5G temporary mobile subscriber identity, 5G-TMSI). The GUAMI includes a mobile country code (Mobile Country Code, MCC) and a mobile network code (Mobile Network Code), MNC), an AMF region ID (AMF Region ID), an AMF set ID (AMF set ID), and an AMF pointer (AMF Pointer). The combination of the MCC and the MNC may uniquely identify a PLMN. There are multiple areas in the PLMN. The AMF Region ID may identify one area in the PLMN. There are multiple AMF sets in one area. The AMF set ID may identify one AMF set in one area. There are multiple AMFs in an AMF set, and the AMF pointer may identify an AMF in an AMF set. The 5G-TMSI is a temporary identifier allocated by the AMF to the UE and is unique within the AMF. Therefore, it can be understood that the GUAMI may uniquely identify an AMF, and the 5G-TMSI may uniquely identify a UE within the AMF range.

In addition, the aforementioned AMF set ID, AMF Pointer, and 5G-TMSI can constitute a 5G system temporary mobile subscriber identity (5G S-temporary mobile subscriber identity, 5G-S-TMSI). It can be understood that the 5G-S-TMSI is a simplified version of the 5G-GUTI. Since the base station is deployed at a fixed location and does not connect to AMFs in multiple regions, for example, a base station deployed by China Mobile in Shanghai will only connect to the AMF in the Shanghai region and will not connect to the AMF in Beijing. Therefore, when selecting an AMF, the RAN does not need to consider the AMF Region ID. The UE can provide a simplified 5G-S-TMSI for the RAN to select an AMF. This can make the air interface signaling messages shorter, improve air interface efficiency, and save signaling resources. Therefore, the 5G-S-TMSI can also be used to identify an AMF. In other words, the 5G-S-TMSI is also a type of identification information for an AMF.<t1>

For example, the NAS registration accept message may be included in the N2 message.

Step 207: The RAN forwards the NAS registration accept message sent by the AMF to the UE.

Since the UE has obtained the 5G-GUTI in the initial registration procedure, in subsequent non-initial registration procedures, the UE initiates a registration procedure by sending an access network message to the RAN. The UE identifier in the registration request message in step 201 is 5G-GUTI. The AN parameter may include identification information of the AMF, for example, a GUAMI or a 5G-S-TMSI. The RAN needs to select an appropriate AMF to serve the UE. Since there is already an AMF that serves the UE, the RAN will preferentially select the AMF that previously served the UE.

The UE obtains the 5G-GUTI in the initial registration procedure. The 5G-GUTI is a temporary identity identifier of the UE, and is allocated by the AMF that serves the UE. When the UE subsequently registers with the network, the UE may provide identification information of the AMF (for example, a 5G-S-TMSI or a GUAMI) in the access network message. The RAN may select the AMF according to the 5G-S-TMSI or the GUAMI.

When the AMF identification information provided by the UE is inappropriate (for example, the originally connected AMF fails, or the UE moves out of the original coverage area, causing the base station to be unable to connect to the original AMF), the RAN needs to reselect an AMF. When selecting an AMF, the RAN will consider one or more of the following factors: the AMF set indicated by the GUAMI, the requested slice, the local operator policy, etc. For example, when the RAN considers the requested slice when selecting an AMF, the UE will include the requested slice information in the registration request sent to the RAN. The RAN side will also store the slice information supported by the AMF (for example, the RAN can obtain the slice information supported by the AMF when the RAN initially establishes a connection with the AMF), so that the RAN will select an AMF that can meet the UE's request for the slice.

In addition, the AMF reselected by the RAN can find the original AMF based on the AMF identification information provided by the UE, and request the UE context from the original AMF.

### 4) Dual Connectivity Architecture:

Figure 4 exemplarily shows a dual connectivity architecture applicable to the embodiments of this application. For example, the dual connectivity may be referred to as Dual steer. Under this architecture, the UE simultaneously accesses the same network through two connections of a 3GPP access type. The two 3GPP access network devices corresponding to the 3GPP access type may be a RAN. For example, the UE may use one SIM card to simultaneously access the same PLMN through two different RANs. Exemplarily, the two connections of the 3GPP access type correspond to two paths. As shown in Figure 4, the first path is that the UE connects to the network through the RAN1, AMF. As described above, in order to establish the second path, the UE initiates registration through the RAN2. The registration initiated through the RAN2 is a non-initial registration. Therefore, when the original AMF in the first path is available, the RAN2 selects the original AMF based on the identification information of the AMF carried by the UE. Therefore, the second path is that the UE connects to the network through the RAN2, AMF. Between the UE and the AMF, there is an N1 connection, and between the AMF and the RAN, there is an N2 connection.

It should be noted that, when two connections of the same 3GPP access type are used simultaneously to access the same network, it does not mean that the UE must simultaneously send or receive data through two different paths. Instead, it means that the UE can either access the network and send or receive data through the first path, or access the network and send or receive data through the second path.

In this application, dual connectivity refers to accessing a network simultaneously through two different paths. The two different paths are respectively connected to two different radio access network devices and two identical or different access and mobility management network elements. A UE supporting dual connectivity refers to a UE that supports simultaneous access to the network through two different paths. An AMF supporting dual connectivity refers to an AMF that supports simultaneously maintaining a connection with the UE through two different paths. It should be noted that, in this application, the names of dual connectivity or multi-connectivity can be further extended as follows:
1: Dual/Multiple Radio Capability, which indicates that the UE supports the capability of accessing the network through dual/multiple radio access paths.
2: Dual/Multiple 3GPP access technologies (dual/multiple 3GPP RAT), where the dual/multiple 3GPP access technologies indicate that the UE accesses the network through dual/multiple 3GPP access technologies.
3: Dual/Multiple steering (dual/multiple steer), where the dual/multiple steering indicates that the UE accesses the network through the paths of dual/multiple steering.
4: Dual/Multiple 3GPP access (dual/multiple 3GPP access), where the dual/multiple 3GPP access indicates that the UE accesses the network through the paths of dual/multiple 3GPP access.
5: Dual/Multiple 3GPP access type (dual/multiple 3GPP access type), where the dual/multiple 3GPP access type indicates that the UE accesses the network through the dual/multiple 3GPP access types.
6: Dual/Multiple connectivity (dual/multiple connectivity), where the dual/multiple connectivity indicates that the UE accesses the network through dual/multiple different paths.
7: Dual/Multiple Registration, which indicates that the UE registers with the network through dual/multiple different paths.
8: Same Access Type, which indicates that the UE accesses the network through dual/multiple paths of the same access type.
9: Same RAT, which indicates that the UE accesses the network through dual/multiple paths of the same RAT.
10: Same Access Network, which indicates that the UE accesses the same network through dual/multiple paths.
11: Dual/Multiple Registration within Same Access Type, which indicates that the UE registers with the network through dual/multiple paths of the same access type.

### 5) N2 connection:

When a UE accesses the network, the connection between the RAN and the AMF is referred to as an N2 connection. In a single connection scenario, the UE connects to the network through a single path involving the RAN and AMF. In a mobility scenario, for example, when the UE changes its connected RAN due to mobility, the UE sends a 5G-GUTI to the new RAN. The new RAN will then select the AMF that previously served the UE. For related descriptions, refer to the selection of the AMF during non-initial registration with the network. The new RAN establishes a new N2 connection with this AMF. Based on the 5G-GUTI, the AMF can determine that it has already saved the UE context, and thus determine that it has previously established an N2 connection for the UE. Therefore, the AMF considers that the new N2 connection established with the new RAN is intended to replace the old N2 connection. As a result, the AMF initiates a procedure to release the N2 connection, that is, to release the old N2 connection. This procedure allows the AMF to manage and release the logical NG connection corresponding to the UE. The AMF may send a UE context release command (UE CONTEXT RELEASE COMMAND) to the old RAN to trigger this procedure. The message may include the AMF UE NGAP ID and the RAN UE NGAP ID. After receiving the message, the old RAN releases signaling and user plane data resources, and returns a UE context release complete (UE CONTEXT RELEASE COMPLETE) message to the AMF.

When a UE accesses the same network through dual connectivity as shown in Figure 4, the UE registers on two paths according to the prior art. In this case, two different RANs on the two paths select the same AMF to access the network. For example, the AMF first creates a UE context on the first path, and establishes an N2 connection for the UE between the RAN1 and the AMF. However, when the UE registers on the second path by connecting the RAN2 and the AMF, the AMF determines, based on the identifier of the UE, that the UE context has been saved, and therefore considers that the registration on the second path is to replace the RAN1 on the first path. Therefore, the AMF releases the N2 connection on the first path. That is, the AMF can maintain only one N2 connection at a time. Therefore, the UE cannot simultaneously access the same network through two different paths.

To resolve the aforementioned issues, this embodiment proposes the following method.

As shown in Figure 5, a method 500 applicable to this application is described. By using the method 500, the UE can access the same network through dual connectivity. The dual connectivity is two connections of a 3GPP access type, corresponding to two paths of two different radio access network devices. The method includes the following steps:
Step 501: UE accesses a network through a first path connecting a RAN 1 and an AMF 1.

It should be noted that, before the UE accesses the network through the first path connecting the RAN 1 and the AMF 1, the UE registers with the network through the first path connecting the RAN 1 and the AMF 1, and the AMF 1 creates the UE context during the registration process, where the UE context includes information about a connection (an N2 connection) between the AMF 1 and the RAN 1. After registration succeeds, it may be understood that the UE can access the network through the first path.

For related description of registering with the network, refer to the registration procedure of the UE in the 3GPP access technology shown in FIG. 2. Details are not described herein again.

It should be noted that, in this embodiment, a registration procedure performed by the UE for the first path may be initial registration, or may be non-initial registration. When the registration type of the UE to register with the network through the RAN1 is initial registration, the UE sends the SUCI. During the registration process, the AMF 1 sends a 5G-GUTI to the UE. The 5G-GUTI includes the identification information of the AMF, which is used by the UE to select the AMF in a non-initial registration process. When the UE registers with the network through the RAN1 in a non-initial registration type, the UE sends a 5G-GUTI, and the RAN1 selects a corresponding AMF based on the AMF identifier.

Step 510: The UE sends an AN message to the RAN2.

In a possible implementation, the AN parameter in the AN message includes indication information and identification information (for example, GUAMI or 5G-S-TMSI) of the AMF1, and the indication information is used by the RAN2 to select an AMF different from the AMF 1. For example, the indication information indicates that the UE supports simultaneous access to the network through two different paths, or indicates that the UE expects to simultaneously access the network through two different paths. Alternatively, the indication information indicates that a different AMF is to be selected. After receiving the indication information, the RAN2 selects an AMF different from the AMF 1 with reference to the indication information and the identification information of the AMF1.

Optionally, the AN message includes dual-steeringdual-steering indication information, and the dual-steering indication information is used by the UDM to store two sets of contexts for the UE. For example, the dual-steering indication information indicates that the UE is in a dual-connection state, or indicates that two sets of contexts are stored. The dual-steering indication information may be carried in the AN parameter in the AN message or in the registration request message, or may exist in the AN message in parallel with the AN parameter and the registration request message. The AN parameter includes the dual-steering indication information. The RAN2 may obtain the dual-steering indication information, and send the dual-steering indication information to the AMF through an N2 message. The registration request message includes dual-steering indication information, and the dual-steering indication information may be a field in a registration type. For example, the dual-steering indication information is a newly added registration type, and an example of a name of the newly added registration type may be DualSteer Registration. The name is not limited herein. The registration type being DualSteer Registration is used to indicate, to the network, that the registration is performing dual connectivity registration of the second path for the UE. When the dual-steering indication information exists in the AN message in parallel with the AN parameter and the registration request message, both the RAN and the AMF may parse the dual-steering indication information.

This embodiment takes as an example that the UE selects the RAN2 and sends an AN message to the RAN2 to request registration with the network. It should be noted that the RAN2 is different from the RAN1.

It should be noted that step 510 is performed when the UE determines that the UE expects to access the network through two different paths simultaneously.

In a possible implementation, the UE determines, based on multi-connectivity information (for example, information about DualSteer), that the UE can access the network through two paths, or determines that the UE expects to access the network through two different paths simultaneously. However, in this case, the UE has only one path for accessing the network through the RAN1. Therefore, the UE may register with the network through the second path, that is, step 510 is performed. For example, the multi-connectivity information may be obtained by the UE based on a service. For example, the current path cannot meet a requirement of a video service for a rate. Therefore, the UE may determine, based on the service, that the UE needs to access the network through multiple paths, and then perform step 510.

In a possible implementation, the UE may obtain multi-connectivity information (for example, DualSteer information) based on an operation instruction of the user. For example, the user may turn on a DualSteer switch on the UE. Further, the UE may enter a DualSteer state based on the operation instruction of the user.

In another possible implementation, the UE may obtain multi-connectivity information (for example, DualSteer information) based on preconfigured information. For example, the UE may be preconfigured with information indicating that the UE supports DualSteer in the factory configuration of the UE. For example, the UE supports simultaneous network access through two different paths.

Step 511: RAN2 selects an AMF.

In a possible implementation, the AN parameter in the AN message includes indication information and identification information of the AMF1 (for example, a GUAMI or a 5G-S-TMSI). RAN2 selects another AMF different from the AMF1 based on the indication information and the identification information of the AMF1.

In this embodiment, an example in which the RAN2 selects the AMF2, and a path connecting the RAN2 and the AMF2 is a second path, is used for description. The AMF2 selected by the RAN2 an AMF different from the AMF1.

Step 512: The RAN2 sends a registration request message to the AMF2.

Optionally, the registration request message further includes dual-steering indication information.

In a possible implementation, the RAN2 sends a next generation application protocol (next generation application protocol, NGAP) message to the AMF2, which may also be referred to as an N2 message. The N2 message includes the registration request message.

Step 513: The AMF2 triggers an authentication and security procedure (authentication and security procedure) among the UE, the AUSF, and the UDM.

In a possible implementation, AMF2 does not have the UE context, and therefore creates a UE context for the UE. For example, AMF2 determines, based on the identifier of the UE (for example, 5G-GUTI), that AMF2 does not have the UE context.

For related descriptions, refer to the related descriptions in step 204 above. Details are not described herein again.

Step 514: AMF2 sends a registration request (Nudm_UECM_Registration request) to the UDM.

The registration request is used by AMF2 to register with the UDM as an AMF serving the UE, and AMF2 registers the UE context with the UDM.

In a possible implementation, the registration request further includes dual-steering indication information. After obtaining the dual-steering indication information, the UDM stores two sets of the UE context. It can be understood that when the UDM stores the second set of context for the same UE, the UDM does not send a deregistration to the AMF1 in the first path, and does not release the first path.

Step 515: The UDM sends a registration response to the AMF2.

Step 516: The AMF2 sends a registration accept (Registration Accept) message to the UE through the RAN2.

After receiving the registration accept message, the UE considers that the registration on the second path is successful, and then the UE may access the network through the second path.

After completing the registration on the second path, the UE simultaneously accesses the same network through the first path and the second path. The access types corresponding to the first path and the second path are 3GPP access types.

Through the steps of method 500, in a dual-steering scenario, the UE sends indication information for selecting different AMFs to the RAN2, so that the RAN2 selects an AMF different from that in the first path. As a result, the different AMFs each maintain one N2 connection for the UE. Then, the UE may access the same network through two different paths corresponding to the two different AMFs.

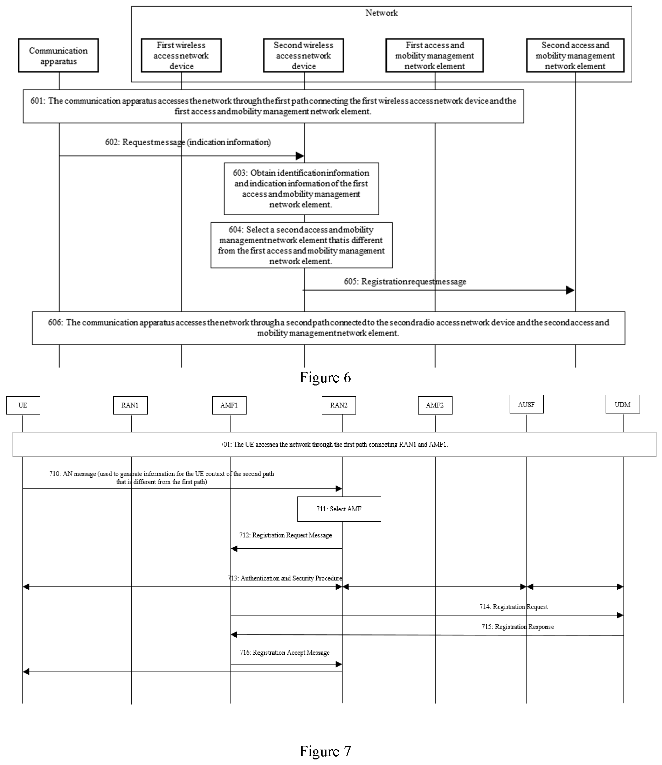

As shown in FIG. 6, the following describes method 600 provided by an embodiment of this application for a communications apparatus to access a same network through two paths simultaneously. The communications apparatus may be a terminal device (for example, UE 110 in FIG. 1), or may be a chip (system) that can be disposed in the terminal device. In other words, method 600 may be performed by a terminal device, or performed by a chip (system) in the terminal device.

As shown in FIG. 6, the following is a schematic flowchart of a communication method according to the communication method. It may include the following steps:
Step 601: The communications apparatus accesses the network through a first path that is connected between the first radio access network device and the first access and mobility management network element.

It should be noted that, before the communications apparatus accesses the network, the communications apparatus registers with the network through a first path that is connected between the first radio access network device and the first access and mobility management network element. During the registration process, the first access and mobility management network element establishes, with the first radio access network device, a connection of the first path for the communications apparatusFor example, the connection may be an N2 connection. After the registration succeeds, it may be understood that the communications apparatus may access the network through the first path.

For a related description of how the communication apparatus registers through the first path, refer to step 501.

In one possible implementation, before the communication apparatus accesses the network through the first path, the communication apparatus obtains identification information of a first access and mobility management network element. For example, the identification information of the first access and mobility management network element may be 5G-GUTI, GUAMI, or 5G-S-TMSI, etc.

In one possible implementation, the communication apparatus receives, from the first access and mobility management network element through the first path, a registration accept message, where the registration accept message includes identification information of the first access and mobility management network element.

Step 602: The communication apparatus sends a request message.

The request message is used to request to register the communication apparatus with the network. The request message includes indication information, where the indication information is used by the second radio access network device to select a second access and mobility management network element different from the first access and mobility management network element.

It should be noted that, before the communications apparatus sends the request message, the communications apparatus determines that the communication apparatus expects to access the network simultaneously through two different paths. Additionally, the communications apparatus determines that the communication apparatus has already accessed the network through the first path. For example, the communications apparatus may determine, based on multi-connectivity information, that the communication apparatus expects to access the network through two paths. For further descriptions of multi-connectivity, refer to step 510.

In a possible implementation, the indication information may not be included in the request message. During the process in which the communications apparatus registers with the network through the second radio access network device, the communications apparatus may send the indication message to the second radio access network device through a separate message.

In a possible implementation, the indication information indicates that the communications apparatus supports simultaneous access to the network through two different paths, or indicates that the communications apparatus hopes to simultaneously access the network through two different paths. The two different paths are respectively connected to two different radio access network devices and two different access and mobility management network elements. Alternatively, the indication information indicates to select different access and mobility management network elements.

In a possible implementation, the indication information is the SUCI of the communication apparatus. It can be understood that the SUCI can implicitly indicate that the communication apparatus supports simultaneous access to the network through two different paths, or implicitly indicate that the communication apparatus expects to simultaneously access the network through two different paths. The indication selects different access and mobility management network elements. For example, the AN parameter in the AN message includes the SUCI and the identification information of the first access and mobility management network element. Therefore, the AN message received by the second radio access network device includes the SUCI and the identification information of the first access and mobility management network element. The second radio access network device can determine, based on the identification information of the first access and mobility management network element, that the communication apparatus is not performing an initial registration but has sent the SUCI. Therefore, the communication apparatus ,ay determine that the communication apparatus expects to access the network through dual connectivity.

In a possible implementation, the request message is an AN message. The communication apparatus sends the AN message to the second radio access network device. The AN message is used to request to register the communication apparatus with the network. The AN message includes indication information. For ease of description, this embodiment uses the AN message as an example for description.

In a possible implementation, the AN message includes AN parameters, and the AN parameters include indication information.

In another possible implementation, the indication information is included in a field of the AN message that can be parsed by the radio access network device. For example, the indication information may exist in the AN message in parallel with the AN parameter and the registration request message.

Optionally, the communications apparatus further sends identification information of the first access and mobility management network element. For example, the access network AN message sent by the communications apparatus to the second radio access network device further includes identification information of the first access and mobility management network element. In a possible implementation, the AN message includes AN parameters, and the AN parameters include indication information and identification information of the first access and mobility management network element.

Step 603: The second radio access network device obtains identification information and indication information of a first access and mobility management network element.

In a possible implementation, the second radio access network device receives a request message from the communications apparatus, where the request message includes identification information and indication information of the first access and mobility management network element. For example, the second radio access network device receives the AN message from the communications apparatus, where the AN message is used to request registration of the communications apparatus with the network, and the AN message includes identification information and indication information of the first access and mobility management network element. Further, the AN parameter in the AN message includes identification information and indication information of the first access and mobility management network element.

In another possible implementation, the second radio access network device receives indication information from the communication apparatus, and receives identification information of the first access and mobility management network element from the core network or the first radio access network device. For example, the UDM in the core network. For example, the second radio access network device receives an AN message from the communication apparatus, where the AN message includes the indication information. The second radio access network device requests, based on the indication information, the core network or the first radio access network device to obtain the information about the communication apparatus on the first path, for example, the identification information of the first access and mobility management network element, so that the second radio access network device receives the identification information of the first access and mobility management network element.

Step 604: The second radio access network device selects a second access and mobility management network element different from the first access and mobility management network element.

In a possible implementation, the second radio access network device selects, based on the identification information and the indication information of the first access and mobility management network element, a second access and mobility management network element different from the first access and mobility management network element.

Step 605: The second radio access network device sends a registration request message to the second access and mobility management network element.

In a possible implementation, the AN message includes an AN parameter and a registration request message, and the second radio access network device sends the registration request message to the second access and mobility management network element. The registration request message is used to request to registration of communications apparatus with the network through the second path connecting the second access and mobility management network element and the second radio access network device.

Step 606: The communications apparatus accesses the network through a second path that connects the second radio access network device and the second access and mobility management network element.

It should be noted that the second access and mobility management network element sends the registration accept message to the communications apparatus through the second radio access network device. The communications apparatus receives the registration accept message, and considers that registration on the second path succeeds, and then can access the network through the second path.

After registration of the second path is completed, the communications apparatus simultaneously accesses a same network through the first path and the second path, and access types corresponding to the first path and the second path are 3GPP access types.

It should be noted that, simultaneously accessing the same network through the first path and the second path does not mean that the communications apparatus must send or receive data through the two paths at the same time, but that the communications apparatus can access the network and send or receive data through the first path. It is also possible to access the network and send or receive data through the second path.

Through the step of the method 600, in a dual connectivity scenario, the communications apparatus sends, to a second radio access network device, indication information for selecting different access and mobility management network elements, so that the second radio access network device selects an access and mobility management network element different from that in the first path. Therefore, the different access and mobility management network elements each maintain one N2 connection for the communications apparatus, and the communications apparatus may access a same network through two different paths associated with the two different access and mobility management network elements.

As shown in FIG. 7, a method 700 applicable to this application is described. According to the method 700, UE can access a same network by using a dual connection. The dual connection is two connections of a 3GPP access type, and corresponds to two paths of different radio access network devices. The method includes the following steps:
Step 701: UE accesses a network through a first path connecting a RAN 1 and an AMF 1.

For related description, refer to the related description in step 501 in FIG. 5, and details are not described herein again.

Step 710: The UE sends an AN message to the RAN2.

In a possible implementation, the AN message includes an AN parameter and a registration request message, and the registration request message includes information used to generate, for the second path, a UE context different from the first path. This embodiment is described by using an example in which the information used to generate, for the second path, the UE context different from the that of the first path is the SUCI carried in the registration request message, that is, the UE identifier carried in the registration request message is the SUCI. It may be understood that although the UE obtains the 5G-GUTI allocated by the AMF 1through the first path, the UE identifier used in the registration request sent by the UE is the SUCI. Optionally, the registration type is initial registration. It should be noted that the AN parameter may include identification information of the AMF in the first path, for example, a GUAMI, a 5G-S-TMSI, or a 5G-GUTI. In other words, the RAN2 may be allowed to select a previous AMF, that is, AMF 1, based on the identification information of the AMF. When the UE identity in the registration request message is the SUCI, even if the same AMF is selected, the AMF considers the UEas a new UE to establish a new connection.

Optionally, the AN message includes dual-steering indication information, where the dual-steering indication information is used by the UDM to store two sets of contexts for the UE. For example, the dual-steering indication information indicates that the UE is in a dual connectivity state, or indicates that two sets of contexts are stored. The dual-steering indication information may be carried in an AN parameter or a registration request message in the AN message, or may exist in parallel with the AN parameter and the registration request message in the AN message. The AN parameter includes the dual-steering indication information, and the RAN2 may obtain the dual-steering indication information, and send the dual-steering indication information to the AMF through an N2 message. The registration request message includes the dual-steering indication information. The dual-steering indication information may be a field in a registration type. For example, the dual-steering indication information is a newly added registration type. For example, a name of the newly added registration type may be DualSteer Registration. Here, the name is not limited. The registration type is DualSteer Registration, which is used to indicate to the network that the registration is performed for the UE to register the second path in a dual connectivity state. When the dual-steering indication information exists in parallel with the AN parameter and the registration request message in the AN message, both the RAN and the AMF may parse the dual-steering indication information.

It should be noted that step 710 is performed when the UE determines that it wishes to access the network simultaneously through two different paths. For example, before the UE sends the AN message, the UE determines that it can access the network through two paths, and the UE determines that the UE has already accessed the network through the first path. For example, the UE may determine, based on the multi-connectivity information, that the UE can access the network through two paths. For a related description of multi-connectivity, refer to step 510 in FIG. 5.

Step 711: RAN2 selects an AMF.

In a possible implementation, for a case in which the registration request message includes the SUCI. In this case, the registration request message in the AN message does not include identification information (for example, a GUAMI or a 5G-S-TMSI) of the AMF. Then, when performing AMF selection, RAN2 selects an appropriate AMF in a manner similar to step 202 in FIG. 2. It should be noted that the RAN cannot parse the content in the registration request message. Therefore, selection of the AMF by the RAN is irrelevant to whether the registration request message carries the identification information of the AMF, and the RAN selects the AMF based on the information in the AN parameter.

It should be noted that, in this embodiment, the AMF selected by the RAN 2 may be the AMF1 in the first path, or may be the AMF2 different from the AMF1. This embodiment is described by using an example in which the RAN2 selects the AMF1, and a path connecting the RAN2 and the AMF1 is the second path.

Step 712: The RAN2 sends a registration request message to the AMF1.

In a possible implementation, for a case in which the registration request message includes the SUCI, the identification information of the UE in the registration request message is the SUCI (The SUCI included in the registration request message corresponding to the second path may be referred to as the second SUCI in the following description in this embodiment.)

It should be noted that the identification information of the UE that is reported by the UE and obtained by the AMF herein is the second SUCI, rather than information such as the 5G-GUTI obtained from the first path. Because the UE randomly generates the SUCI each time, the second SUCI sent by the UE on the second path is different from the first SUCI sent by the first path. Therefore, the AMF cannot associate the UE context of the UE on the first path by using the identification information of the UE, that is, the second SUCI. In other words, the AMF1 considers, according to the second SUCI, that the UE and the UE on the first path are different UEs. Therefore, after completing the following step 713, the AMF1 creates the second UE context for the UE.

Optionally, the registration request message further includes dual-steering indication information.

Step 713: The AMF triggers an authentication and security procedure between the UE, AUSF, and UDM.

For related descriptions, refer to the related descriptions in step 204 above. Details are not described herein again.

As described above, because the AMF1 considers, based on the second SUCI, that the UE and the UE on the first path are different UEs, after completing the authentication and security procedure, the AMF1 creates a second UE context for the UE.

It should be noted that in the authentication and security procedure, the AMF sends the second SUCI to the UDM through the AUSF. The UDM decrypts the second SUCI to obtain the SUPI of the UE. For subscription data of the same UE, there is only one SUPI. For example, one SIM card corresponds to one SUPI. However, there may be a plurality of SUCIs obtained by encrypting the SUPI.

Step 714: AMF1 sends a registration request to the UDM.

This registration request is used by AMF1 to register with the UDM as an AMF serving the UE. AMF1 registers the UE context with the UDM.

In one possible implementation, the registration request further includes dual-steering steering indication information. After obtaining the dual-steering steering indication information, the UDM stores two sets of UE contexts for the UE. It can be understood that when the UDM stores the second set of UE contexts for the same UE, it does not send a deregistration request to AMF1 in the first path, and does not release the first path.

In another possible implementation, the UDM may decrypt the second SUCI received from the UE through the second path to obtain the SUPI, and determine, based on the fact that the SUPI corresponding to the UE identifier on the first path is the same as the SUPI corresponding to the UE identifier on the second path, the UDM determines that the UE accesses the network through the two paths, and therefore stores the second UE context for the UE. For example, the UE context stored by the UDM is sent by AMF1 to the UDM.

Step 715: The UDM sends a registration response to the AMF 1.

Step 716: The AMF1 sends a registration accept message to the UE through the RAN2.

After receiving the registration accept message, the UE considers that the registration on the second path is successful, and then the UE may access the network through the second path.

After completing the registration on the second path, the UE simultaneously accesses the same network through the first path and the second path. The access types corresponding to the first path and the second path are 3GPP access types.

It should be noted that in the foregoing step 711, if the RAN2 selects an AMF2 different from the AMF1, subsequent steps refer to steps 512 to 516 in FIG. 5. In this way, the AMF2 and the AMF1 each maintain one N2 connection for the UE, and then the UE may access the same network through two different paths for two different AMFs.

By following the steps of method 700, in a scenario of dual connectivity, the UE includes information (for example, SUCI) used to generate a UE context for the second path and that is different from the UE context for the first path, in a registration request message to be sent to the AMF. In this way, even if the RAN on the second path selects the same AMF as that on the first path, the AMF considers, based on the information, that the AMF is another UE, and therefore creates a new UE context for the UE. In this way, the AMF separately retains two N2 connections by using two sets of UE contexts. Further, the UE can access the same network through different paths corresponding to the two N2 connections for the same AMF.

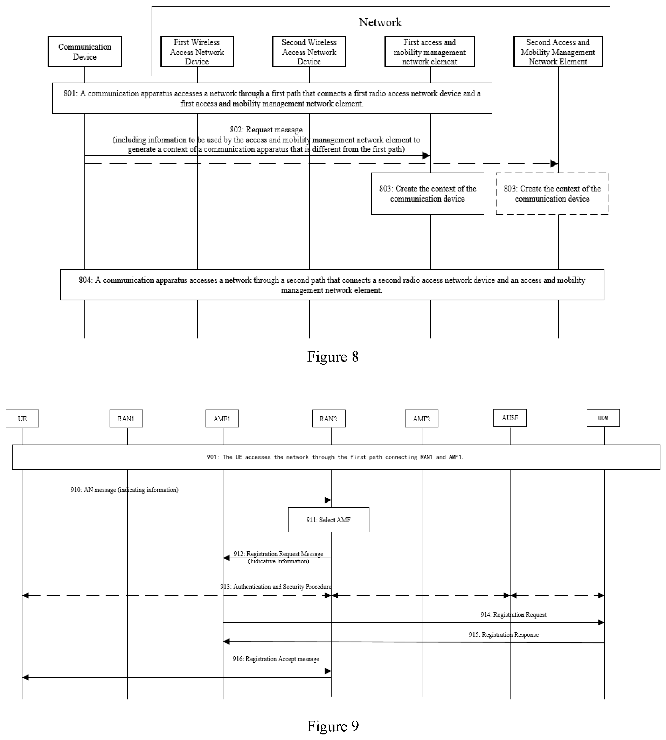

With reference to FIG. 8, the following describes method 800 of a method for accessing a same network through two paths by a communications apparatus according to an embodiment of this application. The communications apparatus may be a terminal device (for example, the UE 110 in FIG. 1), or may be a chip (system) that may be disposed in the terminal device. In other words, method 800 may be performed by a terminal device, or may be performed by a chip (system) in the terminal device.

As shown in Figure 8, the schematic diagram of the communication method process may include the following steps:
Step 801: The communication apparatus accesses the network through the first path by connecting the first radio access network device and the first access and mobility management network element.

It should be noted that, before the communication apparatus accesses the network, the communication apparatus registers with the network by obtaining, through the first path, a connection to the network by connecting the first radio access network device and the first access and mobility management network element. During the registration process, the first access and mobility management network element establishes a connection of the first path with the first radio access network device. For example, it may be an N2 connection. After the registration is successful, it may be understood that the communication apparatus can access the network through the first path.

For descriptions of the communication apparatus registering through the first path, refer to step 501 in method 500.

Related descriptions of the communication apparatus registering through the first path may be referred to in the method 500 in step 501.

In a possible implementation, the communications apparatus receives a registration accept message from the first access and mobility management network element through the first path, where the registration accept message includes identification information of the first access and mobility management network element.

Step 802: The communications apparatus sends a request message.

The request message is used to request to register the communications apparatus with the network, and the request message includes information to be used by the access and mobility management network element to generate a context of the communications apparatus different from the first path. It should be noted that the access and mobility management network element may be the first access and mobility management network element in the first path, or may be a second access and mobility management network element different from the first access and mobility management network element.

It should be noted that, before the communications apparatus sends the request message, the communications apparatus determines that it wishes to access the network through two different paths at the same time, and the communications apparatus determines that the communications apparatus has accessed the network through the first path. For example, the communications apparatus may determine, according to the multi-connection information, that it is expected to access the network through two paths. For a description related to the multi-connection, refer to step 510.

In a possible implementation, the request message is an AN message. The communication apparatus sends the AN message to a second radio access network device. The AN message is used to request the registration of the communication apparatus with the network. The AN message includes information for the access and mobility management network element to generate a context of the communication apparatus that is different from the first path.

In a possible implementation, the information used by the access and mobility management network element to generate a context of the communication apparatus that is different from the first path is included in the AN message. The access and mobility management network element can parse the field in the AN message. For example, the field can exist in the AN message alongside the AN parameters and the registration request message. Another example is that the AN message includes the registration request message, and the registration request message includes the information for the access and mobility management network element to generate the context of the communication apparatus that is different from the first path. Further, the second radio access network device sends the registration request message to the second access and mobility management network element.

In a possible implementation, the communication apparatus sends a request message to a second access and mobility management network element through a second radio access network device, where the request message is a registration request message.

In another possible implementation, the information about the context of the communication apparatus that is generated by the access and mobility management network element and that is different from the first path may not be included in the request message. During the process in which the communication apparatus registers with the network through the second radio access network device, the information about the context of the communication apparatus that is generated by the access and mobility management network element and that is different from the first path may be sent to the second radio access network device through a separate message.

In one possible implementation, the information about the context of the communication apparatus that is generated by the access and mobility management network element and that is different from the first path indicates that the communication apparatus supports simultaneous access to the network through two different paths. Alternatively, it indicates that the communication apparatus wishes to simultaneously access the network through two different paths, where the two different paths are respectively connected to two different radio access network devices and two identical or different access and mobility management network elements. Alternatively, the information about the context of the communication apparatus that is generated by the access and mobility management network element and that is different from the first path indicates the creation of the context of the trusted apparatus.

In one possible implementation, the information used by the access and mobility management network element to generate a communication apparatus with a context different from the first path is the SUCI, that is, the identifier of the communication apparatus carried in the registration request message is the SUCI. It can be understood that although the communication apparatus here has a 5G-GUTI allocated by the first access and mobility management network element, the identifier of the communication apparatus used in the registration request message sent by the communication apparatus is the SUCI. Optionally, the registration type is an initial registration. Therefore, the second access and mobility management network element cannot associate the context of the communication apparatus with the identifier information of the communication apparatus, that is, the SUCI. According to the SUCI, the second access and mobility management network element considers that the communication apparatus and the communication apparatus on the first path are not the same communication apparatus. Therefore, it creates a second communication apparatus context for the communication apparatus.

In one possible implementation, the communication apparatus uses the first SUCI to perform initial registration with the network. The communication apparatus may register with the network through the first path by using this initial registration procedure. Alternatively, the communication apparatus may register with the network through the first path by using another non-initial registration procedure. However, regardless of whether the first path corresponds to the initial registration procedure, the second SUCI used by the communication apparatus to register with the network through the second path is different from the first SUCI used for initial registration.

It should be noted that, the communications apparatus may encrypt the SUPI to obtain the SUCI. SUCI obtained by the communications apparatus by encrypting a same SUPI each time is different, for example, the SUCI obtained by encrypting the SUPI once is the first SUCI, and the SUCI obtained by encrypting the SUPI another time is the second SUCI. However, SUPIs obtained after the first SUCI and the second SUCI are subsequently decrypted are the same.

In a possible implementation, before the communications apparatus sends the request message to the second radio access network device, the communications apparatus generates the second SUCI.

In a possible implementation, the communications apparatus generates the second SUCI based on the information about the information that the communications apparatus expects to access a network simultaneously through two different paths, where the two different paths are separately connected to two different radio access network devices and two same or different access and mobility management network elements. In other words, the communications apparatus generates another SUCI in a process of registering with the network through the second path only after determining that the communications apparatus expects to access the network through two different paths at the same time, so that the network side considers that this is a registration procedure of another UE.

Step 803: The access and mobility management network element creates a context of the communications apparatus.

The access and mobility management network element may be a first access and mobility management network element in the first path, or may be a second access and mobility management network element different from the first access and mobility management network element. creating, by the access and mobility management network element, the context of the communications apparatus for the communications apparatus according to the information used by the access and mobility management network element to generate, by the access and mobility management network element, the context of the communications apparatus that is different from the context of the first path.

This embodiment is described by using an example in which the information used by the access and mobility management network element to generate a context of a communications apparatus that is different from the first path is SUCI. There are the following two cases:
1. When the access and mobility management network element is a first access and mobility management network element in a first path, the first access and mobility management network element has created a context of a first set of communications apparatus for the first path for the communications apparatus, The first set of contexts includes information about an N2 connection between the first access and mobility management network element and the first radio access network device. When the SUCI of the communications apparatus is subsequently received from the second radio access network device, because the SUCI sent by the communications apparatus on the second path is different from the SUCI sent on the first path, The access and mobility management network element considers, according to different SUCIs, that the communications apparatus is different from the communications apparatus on the first path, and therefore creates a context of the second set of communications apparatus for the communications apparatus. The second set of contexts includes information about the N2 connection between the access and mobility management network element and the second radio access network device.
2. When the access and mobility management network element is a second access and mobility management network element different from the first access and mobility management network element, the second access and mobility management network element creates a context of the communications apparatus. The second access and mobility management network element determines, based on the received SUCI, that there is no context of the communications apparatus, and therefore creates a communications apparatus context for the communications apparatus.

Step 804: The communications apparatus accesses the network through a second path that connects the second radio access network device and the access and mobility management network element.

It should be noted that the access and mobility management network element sends the registration accept message to the communications apparatus by using the second radio access network device. The communications apparatus receives the registration accept message, and considers that registration on the second path succeeds, and may further access the network through the second path.

After registration of the second path is completed, the communications apparatus accesses a same network through both the first path and the second path, and access types corresponding to the first path and the second path are 3GPP access types.

By following the steps of method 800, the communication apparatus, in a dual connectivity scenario, sends, through the communication apparatus, information used by the access and mobility management network element to generate a context of the communication apparatus that is different from the first path. Then, even if the access and mobility management network element on the second path is the same as that on the first path, the access and mobility management network element considers, based on this information, that it is another communication apparatus. Therefore, it creates a new context of the communication apparatus for the communication apparatus. As a result, when the two paths share the same access and mobility management network element, the access and mobility management network element retains the two N2 connections through two sets of communication apparatus contexts. Consequently, the communication apparatus can access the same network through two different paths for the same access and mobility management network element.

As shown in Figure 9, a method 900 applicable to this application is introduced. By using method 900, the UE can access the same network through dual connectivity. Dual connectivity refers to two connections of a 3GPP access type, corresponding to two paths of different radio access network devices. The method includes the following steps:
Step 901: UE accesses the network through a first path that connects RAN1 and AMF1.

For related descriptions, refer to the related descriptions in step 501 in FIG. 5. Details are not described herein again.

Step 910: UE sends an AN message to RAN2.

In a possible implementation, the AN message includes indication information, and the indication information is used to retain the connection of the first path when the connection of the second path is established.

In a possible implementation, the registration request message in the AN message includes indication information. For example, the indication information is a newly added registration type, and the indication information is a field in the registration type. For example, the name of the newly added registration type may be DualSteer Registration. A name is not limited herein. The registration type is DualSteer Registration, and is used to indicate to the network that the registration is performed for the UE to perform dual connectivity registration on the second path.

In another possible implementation, the registration request message includes an additional indication information. This indication information indicates to the network that at this moment, the UE is registering a second path for dual connectivity. At this moment, the registration type of the UE may be an initial registration. The AMF determines that the registration type of the UE is an initial registration, and based on the indication information of the UE, determines that this registration is for the UE to register a second path for dual connectivity.

It should be noted that when the UE determines that it hopes to access the network simultaneously through two different paths, step 910 is performed. For example, before the UE sends the AN message, the UE determines that it can access the network through two paths, and the UE determines that it has already accessed the network through the first path. For example, the UE may determine, based on the multi-connectivity information, that it can access the network through two paths. For related descriptions of multi-connectivity, refer to step 510 in FIG. 5.

Step 911: RAN2 selects an AMF.

In a possible implementation, when performing AMF selection, RAN2 selects an appropriate AMF in a manner similar to step 202 in FIG. 2. For example, before the UE sends the AN message, the UE determines that it can access the network through two paths, and the UE determines that it has already accessed the network through the first path. For example, the UE may determine, based on the multi-connectivity information, that it can access the network through two paths. For related descriptions of multi-connectivity, refer to step 510 in FIG. 5.

In another possible implementation, when selecting an AMF, RAN2 may consider whether the AMF supports dual connectivity. The AMF that supports dual connectivity may be understood as that the AMF can retain two paths for the same UE, or may be understood as that the AMF simultaneously maintains a connection with the UE through two paths. The indication information is in a field of an AN message that can be parsed by the RAN. For example, the indication information is in an AN parameter, or the indication information is in an AN message and coexists with the AN parameter and the registration request message. RAN2 selects, based on the indication information, an AMF that supports dual connectivity. Since the UE obtains, during the first registration, the 5G-GUTI allocated by AMF1, the UE may obtain the identification information of AMF1 based on the 5G-GUTI. The UE may carry the identification information of AMF1 (for example, a GUAMI or a 5G-S-TMSI) in an AN parameter during the second registration. RAN2 determines, based on the indication information and the identification information of AMF1, whether AMF1 supports dual connectivity. It should be noted that the RAN stores information about whether the AMF supports dual connectivity. For example, the RAN determines, based on the identification information of AMF1, whether AMF1 supports dual connectivity capability information, so that it can be determined whether AMF1 supports dual connectivity. The selection of an AMF by RAN2 may be divided into the following two cases:
Case 1: If the AMF 1 supports simultaneous maintenance of two N2 connections for a same UE, and the RAN 2 can access the UE, the RAN 2 selects the AMF 1 to serve the UE.

Case 2: If the AMF 1 does not support simultaneous maintenance of two N2 connections for a same UE, or the RAN 2 cannot be connected to the AMF 1, for example, when the UE accesses the network through the NTN, because a satellite coverage area is large, Therefore, the ground gateway station of the RAN 2 may be located in different areas from the AMF 1, and the RAN 2 cannot be directly connected to the AMF 1. Therefore, the RAN 2 selects an AMF 2 different from the AMF 1 based on the area in which the RAN 2 is located.

For the case 2, for a subsequent step in which the RAN 2 selects the AMF 2 different from the AMF 1, refer to steps 512 to 516 in the method 500. Details are not described herein again.

In this embodiment, an example in which the RAN 2 selects the AMF 1, and a path connecting the RAN 2 and the AMF 1 is the second path is used for description.

Step 912: The RAN 2 sends a registration request message to the AMF 1.

The registration request message includes a 5G-GUTI and indication information. Here, the 5G-GUTI is obtained by the UE from the first path and is used by the AMF to associate the UE context created when the UE registers through the first path. The indication information is used to indicate that the second path of the AMF is used by the UE to implement dual connectivity, and there is no need to replace the connection of the first path of the UE. Alternatively, the indication information is used to indicate that the UE supports dual connectivity, or that the UE hopes to access the network through dual connectivity, or that the indication information is used to indicate that in a case where a connection of the second path is established, a connection of the first path is retained.

In step 912, the registration request message is a second registration request message received by the AMF1 from the same UE. The AMF1 determines the UE context of the UE based on the 5G-GUTI of the UE in the registration request message. In addition, the AMF1 adds information about the N2 connection of the second path to the UE context information of the UE. It can be understood that the UE context includes information about the N2 connection of the first path and the second path for the UE. That is, the AMF may retain two N2 connections for the same UE, or it may be understood that the AMF simultaneously maintains, through two paths, the N2 connection with the communications apparatus.

In a possible implementation, the RAN2 sends an NGAP message to the AMF1. The NGAP message may also be referred to as an N2 message. The N2 message includes the registration request message.

Step 913 (optional): The AMF triggers an authentication and security procedure between the UE, AUSF, and UDM.

For related descriptions, refer to the related descriptions in step 204 above. These details will not be further elaborated here.

It should be noted that, when the RAN2 selects the AMF1 in step 911, step 913 may be skipped. When the RAN2 selects an AMF2 different from the AMF1, step 913 is performed.

Step 914: The AMF1 sends a registration request to the UDM.

Step 915: The UDM sends a registration response to the AMF 1.

Step 916: The AMF 1 sends a registration accept message to the UE through the RAN 2.

For steps 914 to 916, refer to the relevant descriptions of steps 714 to 716 in the method 700 above. These details will not be repeated here.

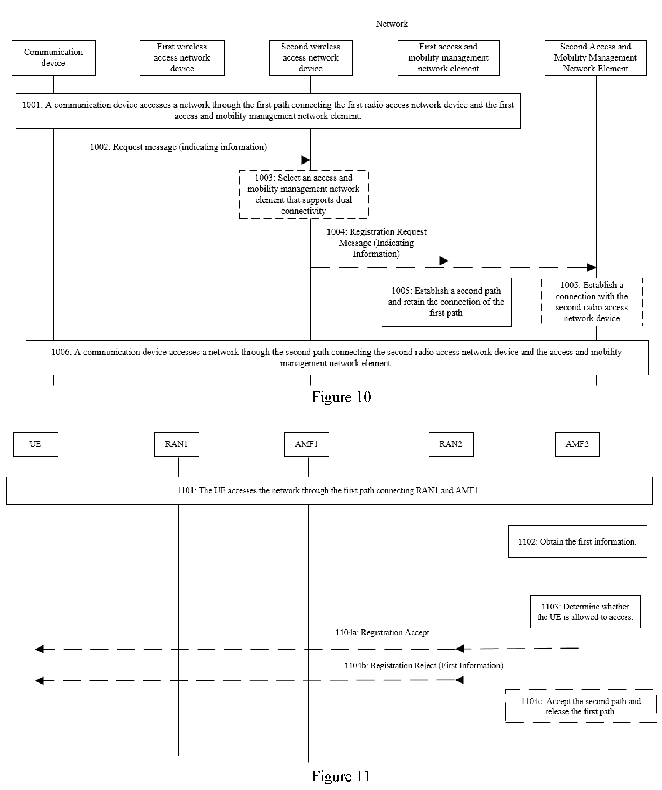

Next, with reference to FIG. 10, this application provides a method 1000 for a communications apparatus to simultaneously access the same network through two paths according to an embodiment of this application. The communications apparatus may be a terminal device (for example, the UE 110 in FIG. 1), or a chip (system) that may be disposed in the terminal device. In other words, the method 1000 may be performed by a terminal device, or performed by a chip (system) in the terminal device.

As shown in FIG. 10, a schematic flowchart of a communication method according to this embodiment of this application may include the following steps:
Step 1001: The communication apparatus accesses the network through the first path by connecting the first radio access network device and the first access and mobility management network element.

It should be noted that, before the communication apparatus accesses the network, the communication apparatus registers with the network by connecting the first radio access network device and the first access and mobility management network element through the first path. During the registration process, the first access and mobility management network element establishes a connection of the first path with the first radio access network device. For example, it may be an N2 connection. After the registration is successful, it can be understood that the communication apparatus can access the network through the first path.

For descriptions related to the communication apparatus registering through the first path, refer to step 501.

In a possible implementation, before the communication apparatus accesses the network through the first path, the communication apparatus obtains identification information of the first access and mobility management network element. For example, the identification information of the first access and mobility management network element may be 5G-GUTI, GUAMI, or 5G-S-TMSI, etc.

In a possible implementation, the communications apparatus receives a registration accept message from the first access and mobility management network element through the first path, where the registration accept message includes identification information of the first access and mobility management network element.

In a possible implementation, in a process in which the communications apparatus registers with the network through the first path connecting the first radio access network device and the first access and mobility management network element, the communications apparatus sends the AN message to the first radio access network device, where the AN message includes the indication information. The indication information indicates that the communications apparatus supports the dual connectivity, or indicates that the communications apparatus expects to access the network by using the dual connectivity, or indicates that the connection of the first path is retained when the connection of the second path is established.

In a possible implementation, the indication information is in a field that can be parsed by the first radio access network device in the AN message. For example, the indication information may be in the AN parameter, or the AN message exists in parallel with the AN parameter and the registration request message. The first radio access network device selects, based on the indication information, an access and mobility management network element supporting dual connectivity.

In a possible implementation, in a process in which the communications apparatus accesses a network through a first path, the communications apparatus sends, to a first radio access network, information indicating that the communications apparatus supports dual connectivity. The first radio access network device selects, based on the information, an access and mobility management network element that supports dual connectivity. Subsequently, steps 203 to 207 in FIG. 2 are performed, so that the communications apparatus completes a registration procedure and can subsequently access the network through the first path.

Step 1002: The communications apparatus sends a request message.

The request message is used to request to register the communications apparatus with the network. The request message includes indication information, where the indication information is used to retain the connection of the first path when the connection of the second path is established.

It should be noted that, before the communications apparatus sends the request information, the communications apparatus determines that it can access the network through two paths, and the communications apparatus determines that it has already accessed the network through the first path. For example, the communications apparatus may determine, based on the multi-connectivity information, that it can access the network through two paths. For descriptions related to multi-connectivity, refer to step 510 in FIG. 5.

In a possible implementation, the indication information may not be included in the request message. During the process in which the communication apparatus registers with the network through the second radio access network device, the indication information may be sent to the second radio access network device through a separate message.

The communication apparatus sends indication information to the access and mobility management network element through the second radio access network device. It should be noted that the access and mobility management network element may be the first access and mobility management network element in the first path, or may be a second access and mobility management network element that is different from the first access and mobility management network element.

In a possible implementation, the indication information indicates that the communication apparatus supports simultaneous access to the network through two different paths. Alternatively, the indication information indicates that the communication apparatus hopes to simultaneously access the network through two different paths. The two different paths are respectively connected to two different radio access network devices and two same or different access and mobility management network elements. Alternatively, the indication information indicates that, in the case of establishing a connection for the second path, the connection for the first path is to be retained.

In a possible implementation, the request message is an AN message. The communication apparatus sends an access network AN message to a second radio access network device. The AN message is used to request registration of the communication apparatus with the network. The AN message includes indication information. For example, the AN message includes a registration request message, and the registration request message includes the indication information. For example, the second radio access network device sends a registration request message to an access and mobility management network element. For another example, the indication information is in a field that can be parsed by the access and mobility management network element in the AN message. For example, the indication information may exist in the AN message in parallel with the AN parameter and the registration request message.

In a possible implementation, the registration request message includes a registration type. The indication information is a field in the registration type that can be parsed by the access and mobility management network element. For example, the indication information may exist in the AN message in parallel with the AN parameter and the registration request message.

In still another possible implementation, the communications apparatus sends a request message to the second access and mobility management network element by using the second radio access network device, where the request message is a registration request message. The registration request message includes indication information.

In a possible implementation, the indication information may not be in the request message. In a process in which the communications apparatus registers with the network by using the second radio access network device, the indication information may be sent to the second radio access network device by using a separate message.

Step 1003 (optional): The second radio access network device selects an access and mobility management network element supporting dual connectivity.

It should be noted that the access and mobility management network element supporting dual connectivity may be understood as that the access and mobility management network element may retain two path connections for a same communications apparatus, or may be understood as that the access and mobility management network element maintains a connection to the communications apparatus through two paths at the same time.

In a possible implementation, the second radio access network device selects, based on the indication information, an access and mobility management network element supporting dual connectivity. It should be noted that, in this case, the indication information further needs to be in a field that can be parsed by the second radio access network device in the AN message. For example, the indication information may be in the AN parameter, or the AN message exists in parallel with the AN parameter and the registration request message.

In one possible implementation, the second radio access network device determines, based on the identification information and the indication information of the first access and mobility management network element, whether the first access and mobility management network element supports dual connectivity. In the case where the first access and mobility management network element supports dual connectivity, the second radio access network device selects the first access and mobility management network element to access the network. Alternatively, in the case where the first access and mobility management network element does not support dual connectivity, the second radio access network device selects a second access and mobility management network element, which is different from the first access and mobility management network element, to access the network.

In another possible implementation, in step 1001, the first radio access network device of the first path selects, based on the indication information, the first access and mobility management network element that supports dual connectivity. Therefore, the second radio access network device selects the first access and mobility management network element based on the identification information of the first access and mobility management network element.

It should be noted that step 1003 is optional. When step 1003 is not performed, the second radio access network device selects the access and mobility management network element by referring to step 202 in FIG. 2.

Step 1004: The second radio access network device sends a registration request message to the access and mobility management network element.

In a possible implementation, the AN message includes an AN parameter and a registration request message, where the registration request message includes indication information. The second radio access network device sends the registration request message to the access and mobility management network element. The registration request message is used to request that the communication apparatus be registered with the network through a second path established by connecting the communication apparatus to the access and mobility management network element and the second radio access network device.

It should be noted that the access and mobility management network element may be the first access and mobility management network element or the second access and mobility management network element.

Step 1005: The access and mobility management network element establishes a connection with the second radio access network device.

It should be noted that the access and mobility management network element may be the first access and mobility management network element in the first path, or may be the second access and mobility management network element different from the first access and mobility management network element. Therefore, there are the following two cases:
1. When the access and mobility management network element is the first access and mobility management network element in the first path, the first access and mobility management network element has already established a connection between the first access and mobility management network element and the first wireless access network device for the first path of the communication apparatus. Subsequently, when receiving the indication information from the second access and mobility management network element, the first access and mobility management network element establishes a connection between the first access and mobility management network element and the second wireless access network device for the second path of the communication apparatus based on the indication information, and retains the connection of the first path.
2. When the access and mobility management network element is the second access and mobility management network element, which is different from the first access and mobility management network element, the second access and mobility management network element establishes a connection with the second wireless access network device.

In a possible implementation, the access and mobility management network element sends indication information to the unified data management network element, where the indication information is used by the unified data management network element to store two sets of contexts for the communication apparatus.

Step 1006: The communications apparatus accesses the network through a second path that connects the second radio access network device and the access and mobility management network element.

It should be noted that the access and mobility management network element sends the registration accept message to the communications apparatus by using the second radio access network device. The communications apparatus receives the registration accept message, and considers that registration on the second path succeeds, and may further access the network through the path.

After registration of the second path is completed, the communications apparatus accesses a same network through both the first path and the second path, and access types corresponding to the first path and the second path are 3GPP access types.

According to the step of the method 1000, in a dual connectivity scenario, the communications apparatus sends, by using the communications apparatus to the access and mobility management network element, indication information for retaining the connection of the first path in a case in which the connection of the second path is established. so that the access and mobility management network element retains the connection of the first path in a case in which the connection of the second path is established for the communications apparatus according to the information. Therefore, when the two paths are a same access and mobility management network element, the access and mobility management network element separately retains connections of the two paths, and the communications apparatus may access a same network through two different paths for a same access and mobility management network element.

The following describes, with reference to FIG. 11, method 1100 provided in an embodiment of this application for obtaining, by UE, a RAT type in a registration procedure. Method 1100 is applicable to a case in which AMFs in the first path and the second path are different. For example, method 1100 is applicable to the foregoing method 500, method 600, method 800, method 900, or method 1000.

As shown in FIG. 11, the schematic flowchart of the communication method may include the following steps:
Step 1101: UE accesses a network through a first path that connects a RAN1 and an AMF1.

It should be noted that step 1101 may refer to step 501 to step 515 in the foregoing method 500.

Step 1102: AMF2 obtains the first information.

The first information is used to determine whether the UE can access the network through the current path. For example, the first information indicates a RAT type of a radio access technology that allows the UE to access a network, or the first information indicates a combination of RAT types that allow the UE to access a network through two paths. For example, if the first information is a TN, the UE is allowed to access the network by using the TN. For another example, the first information is a combination of RAT types on two paths: a terrestrial communications network and a non-terrestrial communications network, 5G and 6G. In this case, the UE is allowed to access the network through one TN path and one NTN path. Alternatively, the UE is allowed to access the network through one 5G path and one 6G path.

In a possible implementation, the AMF obtains the first information from the UDM. For example, the AMF sends indication information to the UDM, and the indication information indicates that the UE supports simultaneous access to the network through two different paths. The UDM may determine the first information of the UE based on the indication information, and send the first information to the AMF 2. For another example, the UDM determines, based on the subscription data of the UE, that the UE supports simultaneous access to the network through two different paths, and sends the first information to the AMF 2. For example, the first information is a RAT type that allows the UE to access a network, or a combination of RAT types that allow the UE to access a network through two paths. For example, the RAT type combination is TN and NTN, 5G and 6G.

In another possible implementation, the AMF obtains the first information from the PCF. For example, the AMF sends indication information to the PCF. The indication information indicates that the UE supports simultaneous network access through two different paths. The PCF may determine the first information of the UE based on the indication information, and send the first information to the AMF 2. For another example, the PCF obtains subscription data of the UE from the UDM, determines, based on the subscription data of the UE, that the UE supports simultaneous network access through two different paths, and sends the first information to the AMF 2. For example, the first information is a type of RAT that allows the UE to access the network, or a combination of types of RATs that allow the UE to access the network through two paths. For example, the combination of types of RATs is TN and NTN, or 5G and 6G. For example, the AMF sends an access management (Access management, AM) policy request message to the PCF. The AM policy request message includes the indication information. The PCF returns an AM policy to the AMF, where the AM policy includes the first information.

In a possible implementation, the UDM or PCF determines the first information based on the indication information and the RAT type of the first path. For example, the UDM or PCF determines that the combination of RAT types that allows the UE to access is 5G and 6G, and the UDM or PCF determines that the RAT type of the first path is 5G, and therefore determines that the first information is 6G, that is, the RAT type of the second path that allows the UE to access the network is 6G.

Step 1103: AMF2 determines whether the UE is allowed to access.

In a possible implementation, AMF2 determines, based on the RAT type of the current access of the UE, whether the UE meets the requirement of the first information, and therefore determines whether the UE is allowed to access. It should be noted that, in this case, determining whether the UE is allowed to access refers to whether the UE is allowed to access the network through dual connectivity. In other words, when the UE does not meet the requirement of the first information, the UE may still access the network through single connectivity in the prior art.

In a possible implementation, when the first information is a combination of RAT types that allow the UE to access the network, AMF2 determines whether the first information includes the RAT type corresponding to the UE accessing the network through the second path. For example, the first information is that the UE is allowed to access the network through a combination of 5G and 6G, and the RAT type corresponding to the UE accessing the network through the second path is 6G. In this case, AMF2 can determine that the UE is not allowed to access.

In another possible implementation, when the first information is a combination of RAT types that allow the UE to access the network, AMF2 determines whether the first information includes the RAT type corresponding to the UE accessing the network through the second path. For example, the first information is that the UE is allowed to access the network through a combination of 5G and 6G, and the RAT type corresponding to the UE accessing the network through the second path is 4G. In this case, AMF2 can determine that the UE is not allowed to access.

For example, the first information allows the UE to access the network by using 5G and 6G, and the AMF 2 only needs to determine whether the first information includes the RAT type corresponding to the second path. When the RAT type corresponding to the second path is 5G or 6G, in this case, the AMF 2 may determine that the UE is allowed to access the network through the second path. When the RAT type corresponding to the second path is 4G, in this case, the AMF 2 may determine not to allow the UE to access the network through the second path.

For example, the first information allows the UE to access the network through a combination of a TN and an NTN, and the AMF 2 on the second path and the AMF 1 on the first path are different AMFs. If the UE currently wishes to access the network by using dual connectivity, If both the AMF 1 and the AMF 2 have a UE context for the UE, the UDM may deliver information about the UE on the other side of the AMF 2 to the AMF 2, where the information about the AMF 1 may be a context of the UE. For example, the RAT type on AMF1 is TN. The AMF 2 compares the RAT types of the UE on the two paths with the first information delivered by the network side, to determine whether the currently selected RAT type meets the requirement of the network side. For example, the first information is allowing the UE to access the network by using a combination of a TN and an NTN, and the AMF 2 determines that the UE selects a TN on both paths. In this case, obviously, a requirement of the network side is not met, and it may be determined that the UE is not allowed to access the network. Alternatively, the AMF 2 determines that the UE selects the TN on the first path and selects the NTN on the second path. In this case, the AMF 2 may determine that the UE is allowed to access the network.

In another example, the first information mentioned above is that the UE is allowed to access the network through a combination of 5G and 6G. AMF2 and AMF1 are different AMFs. If the UE currently wishes to access the network through dual connectivity, and both AMF1 and AMF2 have UE contexts for this UE, then the UDM can deliver the information about the UE on the other AMF1 to AMF2. This information about AMF1 can be the UE context. For example, the RAT type on the AMF1 side is 5G. AMF2 compares the RAT types of the UE on the two paths and the first information delivered by the network side, and can determine whether the currently selected RAT type meets the requirements of the network side. For example, the first information is that the UE is allowed to access the network through a combination of 5G and 6G. AMF2 determines that the UE has selected 5G on both paths, and at this point, it clearly does not meet the requirements of the network side. Therefore, it can be determined that the UE is not allowed to access. Alternatively, AMF2 determines that the UE has selected 5G on the first path and 6G on the second path. At this point, it can be determined that the UE is allowed to access. When AMF2 determines that the UE is allowed to access, step 1104a is performed.

When AMF2 determines that UE access is not allowed, step 1104b is performed to retain the previously established first path, or step 1104c is performed to retain the newly established second path. Further, AMF2 may also send the UE an allowed RAT type, and subsequently, the UE may select a corresponding RAT based on the allowed RAT type on the network side. For example, the allowed RAT type is NTN, and the UE may select a cell whose RAT type is NTN based on the RAT type carried in the broadcast message of the cell.

Step 1104a: AMF 2 sends a registration accept message to the UE.

Among them, the registration accept message includes a 5G-GUTI.

After receiving the registration accept message, the UE considers that it can access the network through the path.

Step 1104b: AMF2 sends a registration reject message to the UE.

Optionally, the registration reject message includes first information, and the first information is used to indicate a type of RAT that allows the UE to access the network.

Step 1104c: AMF2 accepts the second path and releases the first path.

In a possible implementation, AMF2 sends a registration accept message for the second path to the UE through RAN2, and releases the first path through which the UE accesses the network via RAN1 and AMF1.

In a possible implementation, the registration accept message for the second path includes the first information.

It should be noted that AMF2 determines, based on a combination of RAT types, that the UE is not allowed to access the network. A possible scenario is that the first information indicates that the UE is allowed to access the network through a combination of 5G and 6G. The first path is of a 5G RAT type, and the second path is also of a 5G RAT type. Therefore, one of the paths can be retained. A possible implementation is to retain the second path and release the first path. Therefore, AMF2 sends a registration accept message to the UE through RAN2, and releases the first path.

In a possible implementation, AMF2 may send, to the UDM, a request message for releasing the first path, and then the UDM releases the first path connecting AMF1 and RAN1.

By performing the steps of method 1100, the AMF obtains, from the UDM or the PCF, the RAT type that allows the UE to access the network. In this way, the AMF can determine, based on the RAT type of the current path and the RAT type that allows the UE to access the network, whether the UE can access the network through the current path, and send the RAT type that allows the UE to access the network to the UE. In this way, the UE can access the network through the RAT type specified by the network. By notifying the UE of the RAT type that is allowed to access the network through the network, the UE can select an appropriate RAT type to access the network, thereby avoiding a situation in which the UE selects a RAT type that cannot be accessed, and increasing the success rate of the UE accessing the network.

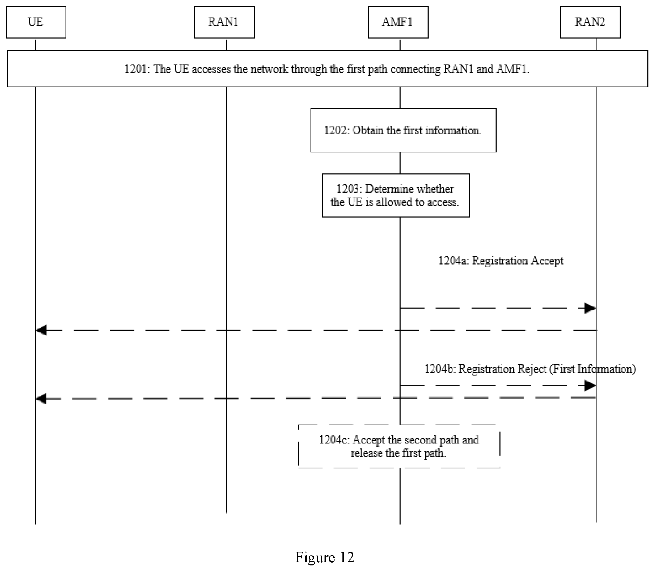

With reference to FIG. 12, the following describes a method 1200 for obtaining, by UE, an RAT type in a registration procedure according to an embodiment of this application. The method 1200 is applicable to a case in which AMFs in the first path and the second path are the same. For example, the method 1200 is applicable to the method 700, the method 800, the method 900, or the method 1000.

As shown in the schematic flowchart of the communication method according to Figure 12, the method may include the following steps:
Step 1201: UE accesses a network through a first path that connects RAN1 and AMF1.

It should be noted that step 1201 may refer to steps 701 to 715 in the method 700 above, or steps 901 to 915 in the method 900 above.

Step 1202: AMF1 obtains the first information.

For a related description of the first information, refer to step 1102 above. Details are not repeated here.

In a possible implementation, the AMF obtains the first information from the UDM. For example, the AMF sends indication information to the UDM, and the indication information indicates that the UE supports simultaneous access to the network through two different paths. The UDM may determine the first information of the UE based on the indication information, and send the first information to the AMF 1. For another example, the UDM determines, based on the subscription data of the UE, that the UE supports simultaneous access to the network through two different paths, and sends the first information to the AMF 1. For example, the first information is a RAT type that allows the UE to access a network, or a combination of RAT types that allow the UE to access a network through two paths. For example, the combination of RAT types is TN and NTN, 5G and 6G.

In another possible implementation, the AMF obtains the first information from the PCF. For example, the AMF sends indication information to the PCF, where the indication information indicates that the UE supports simultaneous access to the network through two different paths. The PCF may determine the first information of the UE based on the indication information, and send the first information to the AMF 1. For another example, the PCF obtains the subscription data of the UE from the UDM, determines, based on the subscription data of the UE, that the UE supports simultaneous access to the network through two different paths, and sends the first information to the AMF 1. For example, the first information is a RAT type that allows the UE to access a network, or a combination of RAT types that allow the UE to access a network through two paths. For example, the RAT type combination is TN and NTN, 5G and 6G. For example, the AMF 1 sends an access management AM policy request message to the PCF, where the AM policy request message includes indication information, and the PCF replies with an AM policy to the AMF 1, where the AM policy includes the first information.

In a possible implementation, the UDM or the PCF determines the first information based on the indication information and the RAT type of the first path. For example, the UDM or the PCF determines that the combination of RAT types that allows the UE to access is 5G and 6G, and the UDM or the PCF determines that the RAT type of the first path is 5G, and therefore determines that the first information is 6G, that is, the RAT type that allows the UE to access the network through the second path is 6G. It can be understood that the UDM or the PCF determines, based on the information about the first path, the RAT type allowed by the second path, as the first information.

Step 1203: AMF1 determines whether the UE is allowed to access.

In a possible implementation, the AMF1 determines, based on the RAT type of the current access of the UE, whether the UE meets the requirement of the first information, and therefore determines whether the UE is allowed to access. It should be noted that, in this case, determining whether the UE is allowed to access refers to whether the UE is allowed to access the network through dual connectivity. In other words, when the UE does not meet the requirement of the first information, the UE may still access the network through single connectivity in the prior art.

In a possible implementation, when the first information is a combination of RAT types that allow the UE to access the network, the AMF1 determines whether the first information includes the RAT type corresponding to the UE accessing the network through the second path. For example, the first information is that the UE is allowed to access the network through a combination of 5G and 6G, and the RAT type corresponding to the UE accessing the network through the second path is 6G. In this case, the AMF1 can determine that the UE is not allowed to access.

In another possible implementation, when the first information is a combination of RAT types that allow the UE to access the network, the AMF1 determines whether the first information includes the RAT type corresponding to the UE accessing the network through the second path. For example, the first information is that the UE is allowed to access the network through a combination of 5G and 6G, and the RAT type corresponding to the UE accessing the network through the second path is 4G. In this case, the AMF1 can determine that the UE is not allowed to access.

For example, the first information is that the UE is allowed to access the network through a combination of 5G and 6G. In this case, AMF1 only needs to determine whether the first information includes the RAT type corresponding to the second path. When the RAT type corresponding to the second path is 5G or 6G, AMF1 can determine that the UE is allowed to access the network through the second path. When the RAT type corresponding to the second path is 4G, AMF1 can determine that the UE is not allowed to access the network through the second path.

For example, the first information is that the UE is allowed to access the network through a combination of TN and NTN. If the UE currently wishes to access the network through dual connectivity, since there are two UE contexts for the UE at this AMF, the AMF can directly compare the RAT types of the two paths selected by the UE with the first information delivered by the network side, and can determine whether the currently selected RAT type meets the network's requirements. For example, the first information is that the UE is allowed to access the network through a combination of TN and NTN. AMF1 determines that the UE has selected TN for both paths. In this case, it is clearly not in line with the network's requirements, and it can be determined that the UE is not allowed to access the network. Alternatively, AMF1 determines that the UE has selected TN for the first path and NTN for the second path. In this case, it can be determined that the UE is allowed to access the network.

In still another example, the first information allows the UE to access the network by using a combination of 5G and 6G, and both the second path and the first path are the AMF 1. If the UE currently expects to access the network by using dual connectivity, Because there are two UE contexts on the AMF for the UE, the AMF may directly compare the RAT types of the UE on the two paths with the first information delivered by the network side, to determine whether the currently selected RAT type meets the network requirement. For example, the first information is allowing the UE to access the network by using a combination of 5G and 6G, and the AMF 1 determines that the UE selects 5G on both paths. In this case, obviously, the requirement of the network side is not met, and it may be determined that the UE is not allowed to access the network. Alternatively, the AMF 1 determines that the UE selects 5G on the first path and selects 6G on the second path. In this case, the AMF 1 may determine that the UE is allowed to access the network.

When the AMF 2 determines that the UE is allowed to access the network, step 1204a is performed.

When determining that the UE is not allowed to access the AMF2, the AMF 2 performs step 1204b to retain the previous first path, or performs step 1204c to retain the newly established second path. Further, the AMF 1 may further send an allowed RAT type to the UE, and the UE may subsequently select a corresponding RAT based on the RAT type allowed by the network side. For example, the allowed RAT type is NTN, and the UE may select, according to the RAT type carried in the broadcast message of the cell, a cell whose RAT type is NTN.

Step 1204a: AMF 1 sends a registration accept message to the UE.

Among them, the registration accept message includes a 5G-GUTI.

After receiving the registration accept message, the UE considers that it can access the network through this path.

Step 1204b: AMF 1 sends a registration reject message to the UE.

Optionally, the registration reject message includes first information, where the first information is used to indicate a type of RAT that allows the UE to access the network.

Step 1204c: The AMF 1 accepts the second path and releases the first path.

In a possible implementation, the AMF 1 sends a registration accept message of the second path to the UE by using the RAN 2, and releases the first path used by the UE to access the network by using the RAN 1 and the AMF 1.

In a possible implementation, the registration accept message of the second path includes the first information.

It should be noted that the AMF 1 determines, based on the combination of the RAT types, that the UE is not allowed to access the network. In a possible case, the first information indicates that the UE is allowed to access the network by using a combination of 5G and 6G, the first path is a 5G RAT type, and the second path is also a 5G RAT type. Therefore, one of the paths may be retained. In a possible implementation, the second path is retained and the first path is released. Therefore, the AMF 1 sends the registration receive message to the UE by using the RAN 2, and releases the first path.

In the step of the method 1200, the AMF obtains, from the UDM or the PCF, the RAT type that allows the UE to access the network, so that the AMF can determine, based on the RAT type of the current path and the RAT type that allows the UE to access the network, whether the UE can access the network through the current path. and sends the RAT type that allows the UE to access the network to the UE, so that the UE can access the network by using the RAT type specified by the network. The network notifies the UE of a RAT type that is allowed to access the network, so that the UE selects a RAN of a proper RAT type to access the network, thereby avoiding the UE from selecting a RAT that cannot be accessed, and increasing an access success rate of the UE.

With reference to the accompanying drawing 13, the following describes method 1300 provided by an embodiment of this application, for obtaining a RAT type by UE in a registration procedure.

As shown in the schematic flowchart of the communication method according to Example 13 described above, in this example, the UE accesses the same network through dual connectivity. The dual connectivity is two connections of a 3GPP access type, corresponding to two paths of different radio access network devices. A difference from the foregoing methods 1100 and 1200 lies in that, when the UE registers on the first path, the UE carries the indication information. In this way, when the UE registers on the first path, the AMF obtains the first information based on the indication information. Method 1300 may include the following steps:
Step 1301: The UE sends a registration request message to the AMF1 through the RAN1.

For related descriptions, refer to the related descriptions in the foregoing steps 201 to 203. Details are not described herein again.

Optionally, the registration request message further includes indication information, where the indication information indicates that the UE supports dual connectivity, or indicates that the UE hopes to access a network through dual connectivity, or indicates that when a connection for establishing the second path is established, the connection for establishing the first path is retained. In this embodiment, an example in which the indication information is dual-stream indication information is used for description.

In a possible implementation, the UE sends an AN message to the RAN1. The AN message includes an AN parameter and a registration request message. The RAN1 sends the registration request message to the AMF. The AN parameter includes dual-steeringdual-steering indication information. The RAN1 selects, based on the dual-steering indication information, an AMF that supports dual connectivity. The AMF that supports dual connectivity may be understood as that the AMF can retain two path connections for the same communication apparatus. Alternatively, it may be understood as that the AMF maintains a connection with the UE through two paths at the same time.

It should be noted that, in this embodiment, the dual-steering indication information may alternatively be replaced with dual connectivity capability information, to notify the network side that the currently accessed UE has dual connectivity capability, and subsequently, a second path connection may be established for the UE through dual connectivity. Further, the UE may obtain the dual-steering indication information based on an operation instruction of the user. For example, the user may turn on a dual connectivity switch on the UE. Further, the UE may enter a dual-steering state based on the operation instruction of the user.

In a possible implementation, the UE may obtain the dual-steering indication information based on an operation instruction of the user. For example, the user may turn on a dual connectivity switch on the UE. Further, the UE may enter a dual-steering state based on the operation instruction of the user.

In another possible implementation, the UE may obtain the dual-steering steering indication information based on preconfigured information. For example, in the factory configuration of the UE, the information that the UE supports dual-steering steering is preconfigured.

In another possible implementation, the UE may obtain the dual-steering steering indication information based on a service. For example, the current path cannot meet the rate requirement of a video service. Therefore, the UE may determine, based on the service, that multiple paths need to be used to access the network.

Step 1302: AMF1 triggers an authentication and security procedure between the UE, AUSF, and UDM.

For related descriptions, refer to the related descriptions in step 204 above. These details will not be repeated here.

Step 1303: AMF1 sends a registration request message to the UDM.

Optionally, the registration request message includes dual-steering indication information. The registration request message is used by the AMF 1 to register with the UDM as the AMF serving the UE.

In a possible implementation, after obtaining the dual-steering indication information from the registration request message, the UDM determines that two different UE contexts may be stored in the UDM for the UE, and a first UE context may be stored for the UE.

In another possible implementation, the registration request message does not include the dual-steering indication information. After obtaining the identity of the UE from the registration request, the UDM may obtain the subscription data of the UE, and based on the dual-steering capability information in the UE subscription data, determining that two different UE contexts may be stored in the UDM for the UE, and a first UE context may be stored for the UE.

Step 1304: The UDM sends a registration response message to the AMF 1.

Optionally, the registration response message further includes first information about performing dual connectivity by the UE, and the first information is used to determine whether the UE can access the network through the current path. For example, the first information indicates a RAT type of a radio access technology that allows the UE to access a network, or the first information indicates a combination of RAT types that allow the UE to access a network through two paths. For example, if the first information is a TN, the UE is allowed to access the network by using the TN. For another example, the first information is a combination of RAT types on two paths: TN and NTN, or 5G and 6G. In this case, the UE is allowed to access the network by using one TN path and one NTN path. Alternatively, the UE is allowed to access the network by using one 5G path and one 6G path.

In a possible implementation, the first information is in the subscription data of the UE. This may be understood as that the UDM obtains the first information from the subscription data of the UE.

Step 1305 (optional): AMF1 obtains the first information.

In a possible implementation, the AMF obtains the first information from the UDM. For example, AMF1 sends dual-steering indication information to the UDM. The dual-steering indication information indicates that the UE supports simultaneous access to the network through two different paths. The UDM may determine the first information of the UE based on the dual-steering indication information, and send the first information to AMF1. For another example, the UDM determines, based on subscription data of the UE, that the UE supports simultaneous access to the network through two different paths, and sends the first information to AMF1. For example, the first information is a combination of a RAT type that allows the UE to access the network and a RAT type that allows the UE to access the network through two paths. For example, the combination of the RAT types is TN and NTN, or 5G and 6G. For example, the AMF sends a subscription data request message to the UDM, where the subscription data request message includes the dual-steering indication information. The UDM returns subscription data to the AMF, where the subscription data includes the first information.

In another possible implementation, the AMF obtains the first information from the PCF. For example, the AMF1 sends dual-steering indication information to the PCF. The dual-steering indication information indicates that the UE supports simultaneous access to the network through two different paths. The PCF can determine the first information of the UE based on the dual-steering indication information and send the first information to the AMF1. For another example, the PCF obtains the subscription data of the UE from the UDM, determines, based on the subscription data of the UE, that the UE supports simultaneous access to the network through two different paths, and sends the first information to the AMF1. For example, the first information is a combination of a RAT type that allows the UE to access the network and a RAT type that allows the UE to access the network through two paths. For example, the combination of RAT types is TN and NTN, or 5G and 6G, etc. For example, the AMF sends an AM policy request message to the PCF, where the AM policy request message includes the dual-steering indication information. The PCF replies to the AMF with an AM policy, where the AM policy includes the first information.

In a possible implementation, the UDM or the PCF determines the first information based on the dual-steering indication information and the RAT type of the first path. For example, the UDM or the PCF determines that a combination of RAT types that allows the UE to access is 5G and 6G, and the UDM or the PCF determines that the RAT type of the first path is 5G, and therefore determines that the first information is 6G, that is, the RAT type of the second path that allows the UE to access the network is 6G.

It should be noted that if there is no restriction on the RAT type of the UE accessing the network, the first information is not delivered to the AMF, that is, step 805 is not performed.

Step 1306 (optional): AMF1 determines whether the UE is allowed to access.

In a possible implementation, AMF1 determines, based on the RAT type of the current access of the UE, whether the UE meets a requirement of the first information, so as to determine whether the UE is allowed to access. It should be noted that, in this case, determining whether the UE is allowed to access refers to whether the UE is allowed to access the network through DualSteer. In other words, when the UE does not meet the requirement of the first information, the UE may still access the network through a single connection in the prior art.

For example, the first information indicates that the UE is allowed to access the network through 5G and 6G. If the RAT type on the AMF1 side is 4G, it can be determined that the UE is not allowed to access. Alternatively, if the RAT type on the AMF1 side is 5G, it can be determined that the UE is allowed to access. In a possible implementation, when determining that the UE is not allowed to access, the AMF1 may return a registration accept message to the UE, and indicate to the UE that the UE is not allowed to use dual connectivity.

When AMF1 determines that the UE is allowed to access, it performs step 1307a, and AMF1 sends a registration accept message to the UE. Further, the AMF may also send a combination of allowed RAT types to the UE. Subsequently, the UE may select a corresponding RAT based on the RAT type allowed by the network side. For example, it is currently restricted that the UE is allowed to access through a combination of TN and NTN. If the first path of the UE is TN, then when the UE selects RAN2, the UE only considers the RAN of NTN. In this way, the combination of RAT types of the two paths meets the requirements of the network side. For example, the allowed RAT type is NTN, and the UE may select, based on the RAT type carried in the broadcast message of the cell, a cell whose RAT type is NTN.

When AMF1 determines that UE access is not allowed, step 1307b is performed, and AMF2 sends a registration rejection message to the UE. Further, the AMF may also send the UE the allowed RAT type, and subsequently, the UE may select the corresponding RAT based on the allowed RAT type on the network side. In another possible implementation, AMF2 sends a registration accept message to the UE, where the registration accept message includes indication information indicating that the UE is not allowed to use dual connectivity.

Step 1308: The UE sends an access network (access network, AN) message to RAN2.

Optionally, the AN message includes dual connectivity indication information, where the dual connectivity indication information is used to retain the connection of the first path when the connection of the second path is established.

Optionally, the UE selects, based on the allowed RAT type obtained in step 807a, RAN2 on the second path. For example, if the allowed RAT type is 6G, the UE selects a 6G RAN for the registration procedure.

In a possible implementation, the registration request message in the AN message includes dual-steering indication information. For example, the dual-steering indication information is a newly added registration type, and the dual-steering indication information is a field in the registration type. For example, the name of the newly added registration type may be DualSteer Registration. Here, the name is not limited. The registration type DualSteer Registration is used to indicate to the network that the registration is for performing a second path registration for dual connectivity of the UE.

In another possible implementation, the registration request message includes an additional indication information, and the indication information indicates to the network that the UE is currently performing a second path registration for dual connectivity. In this case, the registration type of the UE may be an initial registration. The AMF determines, based on the registration type of the UE, that the registration type is an initial registration, and determines, based on the indication information of the UE, that the registration is for performing a second path registration for dual connectivity of the UE.

In the foregoing implementation, after receiving the second registration request message of the same UE, the same AMF may determine the UE context of the UE based on the 5G-GUTI of the UE in the registration request message. In addition, the information about the N2 connection of the second path is retained in the context information of the UE. It may be understood that the AMF may retain two N2 connections for a same UE, or it may be understood that the AMF maintains the N2 connection to the UE through the two paths at the same time.

Step 1309: The RAN2 selects an AMF.

In a possible implementation, the dual-steering indication information is in a field that can be parsed by the RAN in the AN parameter, for example, in the AN parameter, or in the AN message, and exists in parallel with the AN parameter and the registration request message. The RAN2 selects an AMF that supports dual connectivity based on the dual split indication information in the AN message. Because the UE obtains the 5G-GUTI allocated by the AMF 1 during first registration, the UE may obtain the identification information of the AMF 1 based on the 5G-GUTI. During the second registration, the UE may add the identification information (for example, GUAMI or 5G-S-TMSI) of the AMF 1 to the AN parameter. The RAN 2 determines, based on the dual offloading indication information and the identification information of the AMF 1, whether the AMF 1 supports dual connectivity. It should be noted that the RAN stores information about whether the AMF supports dual connectivity. For example, the RAN determines, based on the identification information of the AMF 1, the capability information about whether the AMF 1 supports the dual connectivity, so as to determine whether the AMF 1 supports the dual connectivity.

The selection of an AMF by RAN2 can be divided into the following two scenarios:
Scenario 1: If AMF1 supports maintaining two N2 connections simultaneously for the same UE, and RAN2 can access it, then RAN2 will select AMF1 to serve the UE.

Scenario 2: If AMF1 does not support maintaining two N2 connections simultaneously for the same UE, or RAN2 cannot connect to AMF1, for example, when the UE accesses via NTN, due to the large coverage area of satellites, RAN2 on the ground may be in a different area from AMF1 at the gateway station. As a result, RAN2 cannot directly connect to AMF1, and therefore RAN2 will select AMF2 in its own area, which is different from AMF1.

For Scenario 1, RAN2 selects AMF1 as the AMF for the first path. Subsequent steps are as follows (1310a-1314a).

Step 1310a: RAN2 sends a registration request message to AMF1.

The registration request message includes the 5G-GUTI and the dual-steering indication information. The 5G-GUTI is used by the AMF to associate with a UE context created when the UE registers with the first path. The dual-steering indication information is used to indicate to the AMF that the second path is used to implement dual connectivity of the UE, and a connection of the first path of the UE does not need to be replaced, or indicate that the UE supports dual connectivity. or indicate that the UE wishes to access the network by using the dual connectivity, or indicate that the connection of the first path is retained when the connection of the second path is established.

In a possible implementation, the RAN 2 sends the NGAP message to the AMF 1, which may also be referred to as an N2 message. The N2 message includes the registration request message.

Step 1311a (optional): The AMF determines whether to allow UE access.

In a possible implementation, the AMF 1 determines, based on a type of a RAT currently accessed by the UE, whether the UE meets the requirement of the first information, to determine whether the UE is allowed to access the network. It should be noted that the determining whether to allow the UE to access the network refers to whether the UE is allowed to access the network by using the dual connectivity. In other words, when the UE does not meet the requirement of the first information, the UE may still access the network by using the single connectivity in the prior art. In a possible implementation, when the first information is the RAT type that allows the UE to access the network, the AMF 1 determines whether the first information includes the RAT type corresponding to the second path. For example, the first information is allowing the UE to access the network by using 5G, and a corresponding RAT type used by the UE to access the network through the second path is 6G. In this case, the AMF 1 may determine that the UE is not allowed to access the network. In still another example, the first information indicates that the UE is allowed to access the network by using 5G and 6G, and the RAT type corresponding to the network access by the UE through the second path is 6G. In this case, the AMF 1 may determine that the UE is allowed to access the network.

For example, the first information is a combination of RAT types that allow the UE to access the network. In this case, AMF1 can determine whether the first information includes the RAT type corresponding to the UE accessing the network through the second path. For example, when the RAT type corresponding to the second path is 5G or 6G, AMF1 can determine that the UE is allowed to access the network through the second path. When the RAT type corresponding to the second path is 4G, AMF1 can determine that the UE is not allowed to access the network through the second path.

In another possible implementation, when the first information is a combination of RAT types that allow the UE to access the network, AMF1 can determine whether the first information includes the RAT type corresponding to the UE accessing the network through the second path. For example, the first information is a combination of 5G and 6G that allows the UE to access the network, and the RAT type corresponding to the UE accessing the network through the second path is 4G. In this case, AMF1 can determine that the UE is not allowed to access the network.

For a related description of the AMF's judgment, refer to the related description in step 1103 in FIG. 11. Details are not described herein again.

It should be noted that, since the UE has already completed the authentication and security procedures during the first registration, and the UE accesses the network through the same AMF (i.e., AMF1), the AMF does not need to perform the authentication and security procedures for the UE again. Instead, the AMF can simply store the information related to the UE's second path in the UE context. Since both registrations are performed through AMF1, AMF1 can obtain the RAT types of the two paths. By comparing the combination of RAT types allowed by the network side with the combination of RAT types allowed by the network side, the AMF can determine whether to allow the UE to access the network.

When AMF1 determines to allow the UE to access the network, it performs step 1312a, in which AMF1 sends a registration accept message to the UE through RAN2.

When AMF1 determines not to allow the UE to access the network, it performs step 1313a, in which AMF1 sends a registration reject message to the UE through RAN2. Further, AMF1 may also send the allowed RAT type to the UE. Subsequently, the UE can select the corresponding RAT based on the allowed RAT type on the network side.

In a possible implementation, when determining that the UE is not allowed to access the AMF, step 1314a is performed. The AMF may accept the registration request of the second path of the UE, and release the first path of the UE. For example, When the network side requires the UE to access by using a combination of TN and NTN, the UE accesses the network from TN on the first path, and also accesses the network from TN on the second path. In this case, the RAT type combination of the UE is TN and TN, and the network side requires TN and NTN. Apparently, the UE does not meet the requirement of the network side. Therefore, the AMF may reject the registration request initiated by the UE on the second path, or may choose to accept the registration request of the UE on the second path and replace the connection on the first path.

For the case 2, when the RAN 2 selects the AMF 2 different from the AMF 1, subsequent steps are as follows 1310b to 1318b.

Step 1310b: The RAN 2 sends a registration request message to the AMF 2.

The registration request message includes the 5G-GUTI and the dual-steering indication information. The 5G-GUTI is used by the AMF 2 to indicate the AMF 1 with which the UE is registered in the first path. Subsequently, the AMF 2 may obtain UE context-related information from the AMF 1. The dual-steering indication information is used to indicate to the AMF that the second path is used to implement dual connectivity of the UE. or indicate that the UE supports the dual connectivity, or indicate that the UE expects to access the network by using the dual connectivity, or indicate that the connection of the first path is retained when the connection of the second path is established.

Step 1311b: Obtain UE context information.

The UE context information includes the RAT type of the first path of the UE.

In a possible implementation, AMF2 determines, based on the identification information of the AMF1 in the 5G-GUTI, the AMF1 registered by the UE on the first path, and requests the UE context information from the AMF1. The UE context information includes the first information obtained by the AMF1 from the UDM or PCF, that is, the information about the combination of RAT types that allows the UE to access, as well as the RAT type of the first path of the UE. It should be noted that when the registration request message sent by the UE to the AMF1 in step 1308 includes the dual-steering indication information, the AMF2 obtains the dual-steering indication information from the UE.

Optionally, the context information sent by the AMF1 to the AMF2 further includes the dual-steering indication information of the UE. When the registration request message sent by the UE to the AMF1 in step 1301 includes the dual-steering indication information, the AMF2 can obtain the dual-steering indication information from the AMF1.

In another possible implementation, AMF2 obtains the context information of the UE from the UDM. For example, AMF2 requests the UDM for the context of the UE, and the request message includes the identification information of the UE. AMF2 receives the context of the UE from the UDM. The context of the UE includes the RAT type of the first path of the UE.

Step 1312b (optional): AMF2 determines whether the UE is allowed to access.

In a possible implementation, AMF2 determines, based on the RAT type of the current access of the UE, whether the UE meets a requirement of the first information, so as to determine whether the UE is allowed to access. It should be noted that, in this case, determining whether the UE is allowed to access refers to whether the UE is allowed to access the network through dual connectivity. In other words, when the UE does not meet the requirement of the first information, the UE may still access the network through single connectivity in the prior art.

For related descriptions, refer to the descriptions related to step 1103. Details are not described herein again.

When AMF2 determines that the UE is allowed to access, step 1316b is performed.

When AMF2 determines that UE access is not allowed, it performs step 1317b to retain the previously established first path, or performs step 1318b to retain the newly established second path. Further, the AMF may also send the UE an allowed RAT type, and subsequently, the UE may select a corresponding RAT based on the allowed RAT type on the network side. For example, the allowed RAT type is NTN, and the UE may select a cell whose RAT type is NTN based on the RAT type carried in the broadcast message of the cell.

Step 1313b: AMF2 triggers an authentication and security procedure between the UE, AUSF, and UDM.

Related descriptions refer to the related descriptions in step 204 of FIG. 2 above. These descriptions are not repeated here.

Step 1314b: AMF2 sends a registration request message to the UDM.

Among them, the registration request message includes dual connectivity indication information. The registration request message is used by AMF 2 to register with the UDM as an AMF serving the UE.

After obtaining the dual-steering indication information, the UDM determines that it can store two different UE contexts for the UE in the UDM. Therefore, the UDM stores the second UE context for the UE. That is, the UDM determines that it can store two different UE contexts for the UE under the same access type.

It should be noted that if AMF2 determines that the RAT type currently accessed by the UE cannot meet the requirements of the network side-for example, the network side requires the UE to access the network through a combination of the RAT types of TN and NTN, but the RAT type currently selected by the UE is TN and TN-then AMF2 considers that it cannot enable the UE to access the network through both of these two paths. In this case, the registration request message sent by AMF2 to the UDM does not include the dual-steering indication information. That is, the UDM determines, based on the registration request message sent by AMF2, that AMF2 is used to replace AMF1. Therefore, the UDM sends a deregistration request to AMF1, so that AMF1 deregisters.

Step 1315b: The UDM sends a registration response message to the AMF 2.

Step 1316b: The AMF 2 sends a registration accept message to the UE.

If the AMF 2 determines that the RAT type currently accessed by the UE meets the requirements of the network side, the AMF 2 may allow the UE to access the network through the current RAT type, and send a registration accept message to the UE.

Step 1317b: The AMF 2 sends a registration reject message to the UE.

Optionally, the registration reject message includes an allowed RAT type. Subsequently, the UE may select, based on the allowed RAT type on the network side, a RAN corresponding to the RAT type to register with the network.

A possible implementation is as follows: AMF2 determines the allowed RAT type based on the first information and the RAT type of the first path. For example, the first information indicates that the UE is allowed to access the network through a combination of 5G and 6G. The RAT type of the first path is 5G, and the RAT type of the second path is also 5G. Therefore, one of the paths can be retained. A possible implementation is as follows: the second path is retained, and the first path is released.

Step 1318b: AMF2 receives the second path and releases the first path.

In a possible implementation, AMF2 sends, to the UE through RAN2, a registration accept message of the second path, and releases the first path through which the UE accesses the network by using RAN1 and AMF1.

In a possible implementation, the registration accept message of the second path includes the first information.

It should be noted that, AMF2 determines that the UE is not allowed to access the network. A possible scenario is as follows: the first information indicates that the UE is allowed to access the network through a combination of 5G and 6G. The RAT type of the first path is 5G, and the RAT type of the second path is also 5G. Therefore, one of the paths can be retained. A possible implementation is as follows: the second path is retained, and the first path is released.

In a possible implementation, the AMF 2 may send a request message for releasing the first path to the UDM, and the UDM releases the first path connecting the AMF 1 and the RAN 1.

According to the step of the method 1300, in the dual connectivity scenario, the UE obtains, by using the AMF, from the UDM or the PCF, the RAT type that allows the UE to access the network, so that the AMF may obtain, according to the RAT type of the current path and the RAT type that allows the UE to access the network. determining whether the UE can access the network through the current path, and sending the RAT type that allows the UE to access the network to the UE, so that the UE can access the network by using the RAT type specified by the network. The network notifies the UE of a RAT type that is allowed to access the network, so that the UE selects an appropriate RAT type for access. This prevents the UE from selecting a RAT that cannot be accessed, and increases an access success rate of the UE.

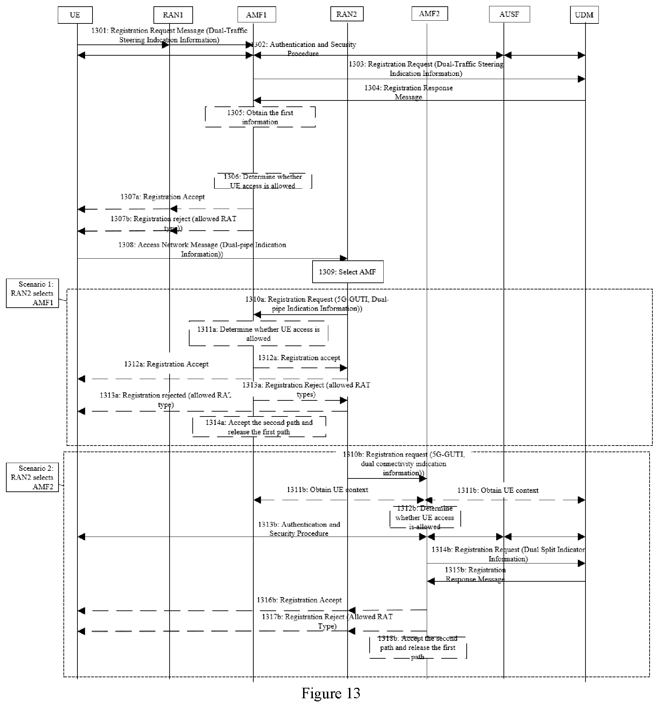

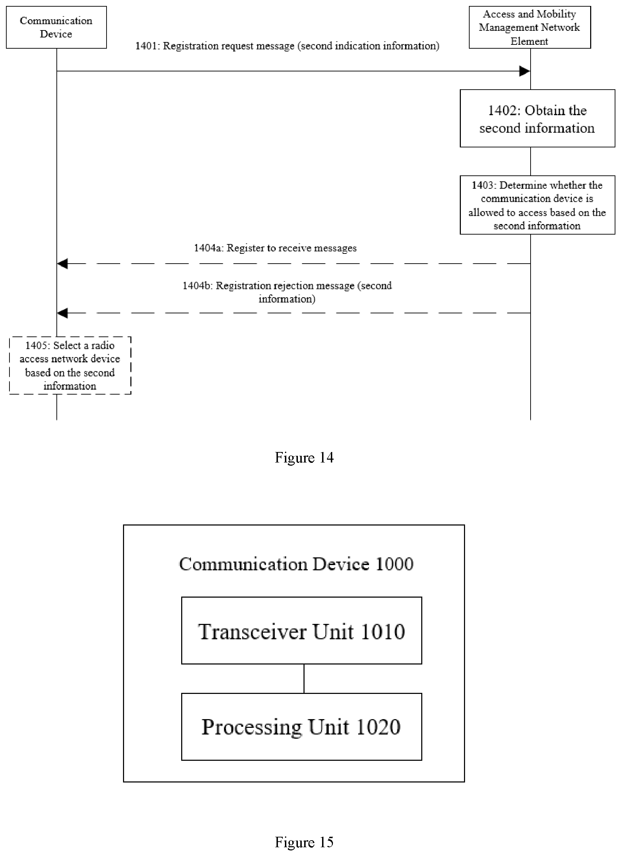

With reference to FIG. 14, the following describes a method 1400 for obtaining a RAT type by a communications apparatus in a registration procedure according to an embodiment of this application. It should be noted that FIG. 14 is used as an example for description herein, and this method is applicable to any one of the foregoing procedures in FIG. 5 to FIG. 13. The communications apparatus may be a terminal device (for example, the UE 110 in FIG. 1), or a chip (system) that may be disposed in the terminal device. In other words, the method 1400 may be performed by the terminal device, or may be performed by a chip (system) in the terminal device.

As shown in Figure 14, the schematic diagram of the communication method process may include the following steps:
Step 1401: The communication apparatus sends a registration request message to the access and mobility management network element.

The registration request message includes second indication information, where the second indication information indicates that the communication apparatus supports dual connectivity.

There are two scenarios in which the communication apparatus sends a registration request message to the mobility management network element:
Scenario 1: The communication apparatus registers with the network through a first path.

Scenario 2: The communication apparatus has already accessed the network through the first path. At this point, the communication apparatus registers with the network through the second path.

In one possible implementation, the second indication information may be the indication information in method 600. For a specific implementation of step 1401, refer to the above steps 602 to 605.

In another possible implementation, the second indication information may be the indication information in method 800, which is used to generate a context of a communication apparatus that is different from the first path for the second path. For a specific implementation of step 1401, refer to the above step 802.

In another possible implementation, the second indication information may be the indication information in method 1000. For a specific implementation of step 1401, refer to the above steps 1000 to 1004.

In another possible implementation, step 1402 may be: The access and mobility management network element obtains the second information.

The access and mobility management network element obtains the second information based on the second indication information. The second information indicates the RAT type that allows the communication apparatus to access the network.

In a possible implementation, for a specific implementation of step 1402, refer to step 1102 in method 1100.

In another possible implementation, for a specific implementation of step 1402, refer to step 1202 in method 1200.

In another possible implementation, for a specific implementation of step 1402, refer to step 1305 in method 1300.

In another possible implementation, for a specific implementation of step 1403, refer to step 1202 in method 1200.

In a possible implementation, the second information includes the RAT type corresponding to the access path of the communications apparatus, and the access and mobility management network element sends a registration accept message to the communications apparatus (step 1404a is performed). For Case 1, the registration accept message may further include second information.

In a possible implementation, the second information does not include the RAT type corresponding to the access path of the communications apparatus, and the access and mobility management network element sends a registration rejection message to the communications apparatus (step 1404b is performed).

For Case 2, in a possible implementation, the second information includes a combination of RAT types corresponding to the two paths, and the access and mobility management network element sends a registration accept message to the communications apparatus (step 1404a is performed).

For Case 2, in a possible implementation, the second information does not include a combination of RAT types corresponding to the two paths, and the access and mobility management network element sends a registration rejection message to the communications apparatus (step 1404b is performed).

For Scenario 2, in another possible implementation, the second information does not include the combination of RAT types corresponding to the two paths. The access and mobility management network element sends a registration accept message to the communication apparatus through the second path, and releases the connection of the first path. For related descriptions, refer to step 1104c in method 1100 or step 1204c in method 1200.

Step 1404b: The access and mobility management network element sends a registration reject message to the communication apparatus.

In a possible implementation, the registration reject message includes the second information. For a specific implementation of step 1404b, refer to step 1104a in method 1100 or step 1204a in method 1200.

Step 1404b: The access and mobility management network element sends a registration reject message to the communication apparatus.

In a possible implementation, the registration reject message includes the second information. For a specific implementation of step 1404b, refer to step 1104b in method 1100 or step 1204b in method 1200.

Step 1405: The communications apparatus selects a radio access network device based on the second information.

In a possible implementation, the communications apparatus sends, based on the second information, the AN message to the radio access network device of the RAT type that is allowed to access the network, where the AN message is used to request to register the communications apparatus with the network. It should be noted that the communications apparatus may perform this step in a case in which the communications apparatus cannot access the network through two paths. For example, when receiving the registration accept message or the registration reject message of the first path, or receiving the registration reject message of the second path, the communications apparatus may select a radio access network device that meets the second information to access the network.
obtaining, by using the access and mobility management network element, the RAT type that allows the communications apparatus to access the network, so that the access and mobility management network element can determine, according to the RAT type of the current path and the RAT type that allows the communications apparatus to access the network, whether the communications apparatus can access the network through the current path. and sends the RAT type that allows the communications apparatus to access the network to the communications apparatus, so that the communications apparatus can access the network by using the RAT type specified by the network. The network notifies the UE of a RAT type that is allowed to access the network, so that the UE selects an appropriate RAT type for access, so that the UE is prevented from selecting a RAT that cannot be accessed, and an access success rate of the UE is increased.

The preceding text, in combination with FIG. 5 to FIG. 14, has described in detail an embodiment of a communication method on a communication apparatus side in this application. The following will describe in detail, in combination with FIG. 15 to FIG. 17, an embodiment of a communication apparatus on a communication apparatus side in this application. It should be understood that descriptions of the apparatus embodiment correspond to descriptions of the method embodiment. Therefore, for parts that are not described in detail, refer to the foregoing method embodiments.

FIG. 15 is a schematic structural diagram of a communication apparatus 1000 according to an embodiment of this application. As shown in FIG. 15, the apparatus 1000 may include a transceiver unit 1010 and a processing unit 1020. The transceiver unit 1010 may communicate with an external device, and the processing unit 1020 is configured to perform data processing. The transceiver unit 1010 may also be referred to as a communications interface or a transceiver unit.

In a possible design, the apparatus 1000 may implement steps or processes performed by the communication apparatus in the corresponding method embodiment in the foregoing text. The processing unit 1020 is configured to perform operations related to processing performed by the communication apparatus in the corresponding method embodiment in the foregoing text. The transceiver unit 1010 is configured to perform operations related to receiving and sending performed by the communication apparatus in the corresponding method embodiment in the foregoing text.

In another possible design, the apparatus 1000 may implement steps or procedures performed by the access and mobility management network element in the foregoing method embodiment, and the transceiver unit 1010 is configured to perform operations related to sending and receiving of the access and mobility management network element in the foregoing method embodiment. The processing unit 1020 is configured to perform an operation related to processing by the access and mobility management network element in the foregoing method embodiment.

In still another possible design, the apparatus 1000 may implement steps or procedures corresponding to the radio access network device in the foregoing method embodiment, and the processing unit 1020 is configured to perform operations related to processing of the radio access network device in the foregoing method embodiment. The transceiver unit 1010 is configured to perform transceiver-related operations of the radio access network device in the foregoing method embodiment.

It should be understood that the apparatus 1000 herein is embodied in a form of a functional unit. The term "unit" herein may refer to an application specific integrated circuit (ASIC), an electronic circuit, a processor for executing one or more software or firmware programs (e.g., shared processor, proprietary processor, or group processor, etc.) and memory, merge logic, and/or other suitable components that support the described functions. In an optional example, a person skilled in the art may understand that the apparatus 1000 may be specifically the transmit end in the foregoing embodiment, and may be configured to perform procedures and/or steps corresponding to the transmit end in the foregoing method embodiment, or the apparatus 2000 may be specifically the receive end in the foregoing embodiment. It may be configured to perform procedures and/or steps corresponding to the receive end in the foregoing method embodiment. To avoid repetition, details are not described herein again.

The apparatus 1000 of each of the foregoing solutions has a function of implementing a corresponding step performed by the transmit end in the foregoing method. Alternatively, the apparatus 1000 of each of the foregoing solutions has a function of implementing a corresponding step performed by the receive end in the foregoing method. The function may be implemented by hardware, or may be implemented by hardware executing corresponding software. The hardware or software includes one or more modules corresponding to the foregoing function. For example, the transceiver unit may be replaced by a transceiver (for example, a sending unit in the transceiver unit may be replaced by a transmitter, and a receiving unit in the transceiver unit may be replaced by a receiver). Other units, such as a processing unit, may be replaced by a processor, to separately perform the receiving and sending operations and related processing operations in each method embodiment.

In addition, the transceiver unit may further be a transceiver circuit (for example, may include a receiving circuit and a sending circuit). The processing unit may be a processing circuit. In embodiments of this application, the apparatus 1000 may be the receive end or the transmit end in the foregoing embodiments, or may be a chip or a chip system, for example, a system on chip (system on chip, SoC). The transceiver unit may be an input/output circuit or a communications interface. The processing unit is a processor, a microprocessor, or an integrated circuit integrated on the chip. This is not limited herein.

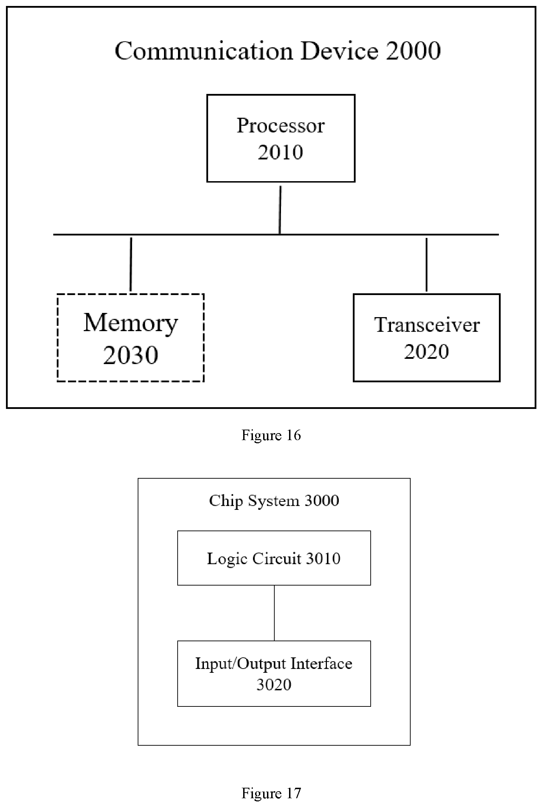

FIG. 16 is a schematic structural diagram of a communications apparatus 2000 according to an embodiment of this application. As shown in FIG. 16, the apparatus 2000 includes a processor 2010 and a transceiver 2020. The processor 2010 and the transceiver 2020 communicate with each other through an internal connection path. The processor 2010 is configured to execute an instruction, to control the transceiver 2020 to send a signal and/or receive a signal.

Optionally, the apparatus 2000 may further include a memory 2030, and the memory 2030 communicates with the processor 2010 and the transceiver 2020 through an internal connection path. The memory 2030 is configured to store an instruction, and the processor 2010 may execute the instruction stored in the memory 2030.

In a possible implementation, the apparatus 2000 is configured to implement procedures and steps corresponding to the communications apparatus in the foregoing method embodiment.

In another possible implementation, the apparatus 2000 is configured to implement procedures and steps corresponding to the access and mobility management network element in the foregoing method embodiment.

In another possible implementation, the apparatus 2000 is configured to implement each procedure and step corresponding to the radio access network device in the foregoing method embodiments.

It should be understood that the apparatus 2000 may specifically be the transmit end or the receive end in the foregoing embodiments, or may be a chip or a chip system. Correspondingly, the transceiver 2020 may be a transceiver circuit of the chip. This is not limited herein. Specifically, the apparatus 2000 may be configured to perform each step and/or procedure corresponding to the transmit end or the receive end in the foregoing method embodiments.

Optionally, the memory 2030 may include a read-only memory and a random access memory, and provide instructions and data to the processor. A part of the memory may further include a non-volatile random access memory. For example, the memory may further store information about a device type. The processor 2010 may be configured to execute instructions stored in the memory. When the processor 2010 executes the instructions stored in the memory, the processor 2010 is configured to perform each step and/or procedure corresponding to the transmit end or the receive end in the foregoing method embodiments.

In an implementation process, the steps of the foregoing method may be completed by using an integrated logic circuit of hardware in the processor or an instruction in a form of software. The steps of the method disclosed with reference to the embodiments of this application may be directly performed and completed by a hardware processor, or may be performed and completed by using a combination of hardware and software modules in the processor. The software module may be located in a mature storage medium in the field, such as a random access memory, a flash memory, a read-only memory, a programmable read-only memory, an electrically erasable programmable memory, or a register. The storage medium is located in the memory, and the processor reads information in the memory, and completes the steps of the foregoing method in combination with hardware of the processor. To avoid repetition, details are not described herein again.

It should be noted that the processor in this embodiment of this application may be an integrated circuit chip, and has a signal processing capability. In an implementation process, the steps in the foregoing method embodiments may be completed by using an integrated logic circuit of hardware in the processor or an instruction in a form of software. The foregoing processor may be a general purpose processor, a digital signal processor, an application-specific integrated circuit, a field programmable gate array or another programmable logic device, a discrete gate or transistor logic device, or a discrete hardware component. The processor in the embodiments of this application may implement or perform the methods, steps, and logical block diagrams disclosed in the embodiments of this application. The general-purpose processor may be a microprocessor, or the processor may be any conventional processor, or the like. The steps of the method disclosed with reference to the embodiments of this application may be directly performed and completed by a hardware decoding processor, or may be performed and completed by using a combination of hardware and software modules in the decoding processor. The software module may be located in a mature storage medium in the field, such as a random access memory, a flash memory, a read-only memory, a programmable read-only memory, an electrically erasable programmable memory, or a register. The storage medium is located in the memory, and the processor reads information in the memory, and completes the steps of the foregoing method in combination with hardware of the processor.

It can be understood that, in the embodiments of this application, the memory may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external high-speed cache. By way of example but not limitation, many forms of RAM are available, such as static random access memory, dynamic random access memory, synchronous dynamic random access memory, double data rate synchronous dynamic random access memory, enhanced synchronous dynamic random access memory, and direct memory bus random access memory. It should be noted that the memory of the system and method described in this specification is intended to include, but not limited to, these and any other memory of a suitable type.

FIG. 17 is a schematic structural diagram of a chip system 3000 according to an embodiment of this application. As shown in FIG. 17, the chip system 3000 (or may also be referred to as a processing system) includes a logic circuit 3010 and an input/output interface (input/output interface) 3020.

Among them, the logic circuit 3010 may be a processing circuit in the chip system 3000. The logic circuit 3010 may be coupled to a storage unit, invoke an instruction in the storage unit, so that the chip system 3000 can implement the methods and functions in the embodiments of this application. The input/output interface 3020 may be an input/output circuit in the chip system 3000, and is configured to output information processed by the chip system 3000, or input data or signaling information to be processed into the chip system 3000 for processing.

As a solution, the chip system 3000 is configured to implement an operation performed by the communications apparatus in the method embodiments described above.

In a solution, the chip system 3000 is configured to implement operations performed by the access and mobility management network element in the foregoing method embodiments.

In a solution, the chip system 3000 is configured to implement operations performed by the radio access network device in the foregoing method embodiments.

An embodiment of this application further provides a computer readable storage medium, and the computer readable storage medium stores a computer instruction used to implement the method performed by the communications apparatus, the access and mobility management network element, and the radio access network device in the foregoing method embodiments.

An embodiment of this application further provides a computer program product, including computer program code or an instruction. When the computer program code or the instruction runs on a computer, the computer implements the methods performed by the communications apparatus, the access and mobility management network element, and the radio access network device in the foregoing method embodiments.

An embodiment of this application further provides a communications system, including the foregoing communications apparatus, an access and mobility management network element, and a radio access network device, and optionally, may further include a UDM or a PCF.

For the interpretation of related content and the beneficial effects in any one of the devices provided above, refer to the corresponding method embodiments provided above. These are not described in detail herein.

To facilitate understanding of the foregoing embodiments provided in this application, the following descriptions are made:
1) In this application, unless otherwise specified or there is a logical conflict, the terms and/or descriptions in different embodiments are consistent and can be mutually referenced. The technical features in different embodiments can be combined to form a new embodiment according to the internal logical relationship of the technical features.
2) In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists. In the cases, A and B may be singular or plural. In the text description of this application, the character "/" generally indicates that an association relationship between the associated objects before and after the character "/" is an "or" relationship. "At least one of the following items (pieces)" or a similar expression thereof refers to any combination of these items, including any combination of a single item (piece) or multiple items (pieces). For example, "at least one of a, b, and c (pieces)" may indicate the following cases: a, or, b, or, c, or, a and b, or, a and c, or, b and c, or, a, b, and c. In the cases, a, b, and c may be singular or plural.
3) In this application, "first," "second," and various numerical designations (e.g., #1, #2, etc.) indicate distinctions made for the purpose of convenient description. These designations are not intended to limit the scope of the embodiments of this application. For example, they distinguish between different messages, rather than being used to describe a specific sequence or order of precedence. It should be understood that the objects described in this way can be interchanged in appropriate circumstances, so as to describe solutions other than the embodiments of this application.
4) In this application, descriptions such as "when...," "in the case of...," and "if" refer to the device performing corresponding processing under certain objective conditions. These descriptions are not intended to limit the time, nor do they require the device to have a judgment action when implementing the processing. Nor do they imply the existence of other limitations.
5) In this application, "used to indicate" may include being used to directly indicate and being used to indirectly indicate. When it is described that certain indication information is used to indicate A, it may include that the indication information directly indicates A or indirectly indicates A, but this does not mean that the indication information must carry A.

The indication method involved in the embodiments of this application should be understood as encompassing various methods that can enable a to-be-indicated party to learn the to-be-indicated information. The to-be-indicated information may be sent as a whole, or may be divided into multiple pieces of sub-information and sent separately. Moreover, the sending periods and/or sending opportunities of these pieces of sub-information may be the same or different. This application does not impose any specific limitation on the sending method.

6) In the embodiments of this application, the "indication information" may be an explicit indication, that is, directly indicated through signaling, or obtained by combining parameters indicated by the signaling with other rules or other parameters or through derivation. It may also be an implicit indication, that is, obtained by combining rules or relationships or other parameters or through derivation. This application does not impose any specific limitation on this.

6) In this application, the "protocol" may refer to a standard protocol in the communications field. For example, it may include a 5G protocol, an NR protocol, and a related protocol applied to a future communications system. This application does not impose any specific limitation on this. "Predefinition" may include predefinition. For example, it may be defined by a protocol. "Preconfiguration" may be implemented by pre-storing corresponding code, tables, or other methods that can be used to indicate related information in a device. This application does not impose any specific limitation on its specific implementation method.

7) In this application, "communication" may also be described as "data transmission," "information transmission," "data processing," and the like. "Transmission" includes "sending" and "receiving."

A person of ordinary skill in the art can realize that, in combination with the descriptions of the embodiments disclosed in this specification, the units and algorithm steps of each example can be implemented by electronic hardware or a combination of computer software and electronic hardware. Whether these functions are performed by hardware or software depends on specific application and design constraints of the technical solutions. Professional technicians can use different methods to implement the described functions for each specific application. However, such implementation should not be considered as going beyond the scope of this application.

It may be clearly understood by a person skilled in the art that, for the purpose of convenient and brief description, for a specific working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored. Or not perform. In addition, the displayed or discussed mutual couplings or direct couplings or communication connections may be implemented by using some interfaces, and the indirect couplings or communication connections between apparatuses or units may be implemented in electrical, mechanical, or other forms.

The units described as separate components may or may not be physically separate. The parts displayed as units may or may not be physical units, that is, they may be located in one place, or may be distributed over multiple network units. According to actual needs, some or all of the units may be selected to achieve the objectives of the solutions in this embodiment.

Additionally, in the various embodiments of this application, the functional units may be integrated into one processing unit, or may exist physically as separate units. Alternatively, two or more units may be integrated into one unit.

If the functions are implemented in the form of software functional units and sold or used as independent products, the functions may be stored in a computer-readable storage medium. Based on such an understanding, the technical solutions of this application essentially, or the part contributing to the conventional technology, or some of the technical solutions may be implemented in the form of a software product. The computer software product is stored in a storage medium and includes several instructions for instructing a computer device to perform all or some of the steps of the methods described in the various embodiments of this application. The aforementioned storage medium includes: a USB flash drive, a removable hard disk, a read-only memory, a random access memory, a magnetic disk, or an optical disc of any kind that can store program code.

As described above, this is merely a specific implementation of this application. However, the protection scope of this application is not limited to this. Any person skilled in the art of this field, within the technical scope disclosed by this application, can easily think of variations or replacements, all of which should be covered within the protection scope of this application. Therefore, the protection scope of this application shall be determined according to the protection scope of the claims described above.

## Claims

1. A communication method, wherein the method comprising:
accessing, by a communication apparatus, a network through a first path which connects a first radio access network device and a first access and mobility management network element; and
sending, by the communication apparatus, a request message to a second radio access network device, wherein the request message is used to request to register the communication apparatus with the network, wherein the request message comprises indication information, and the indication information is used by the second radio access network device to select a second access and mobility management network element that is different from the first access and mobility management network element, wherein the communication apparatus simultaneously accesses the network through the first path and a second path that connects the second radio access network device and the second access and mobility management network element.

2. The method according to claim 1, wherein the indication information indicates that the communication apparatus supports simultaneous access to the network through two different paths, or indicates that the communications apparatus expects to simultaneously access the network through two different paths; and the two different paths are respectively connected to two different radio access network devices and two different access and mobility management network elements; or, the indication information indicates to select different access and mobility management network elements.

3. The method according to claim 1 or 2, wherein the request message comprises an access network parameter, and the access network parameter comprises the indication information.

4. The method according to any one of claims 1 to 3, wherein the request message further comprises identification information of the first access and mobility management network element.

5. The method according to any one of claims 1 to 4, wherein before the sending, by a communications apparatus, a request message to a second radio access network device, the method further comprises:
determining, by the communication apparatus, that the communication apparatus desires to access the network simultaneously through two different paths; wherein the two different paths are respectively connected to two different radio access network devices and two different access and mobility management network elements.

6. A communication method, wherein the method comprising:
accesseing, by a communication apparatus, the network through a first path which connects a first radio access network device and a first access and mobility management network element,
sending, by the communication apparatus, a request message to a second access and mobility management network element via a second radio access network device, wherein the request message is used to request to register the communication apparatus with the network, and the request message comprises information used by the second access and mobility management network element to generate a context of the communication apparatus that is different from the first path;wherein the second access and mobility management network element is the same as or different from the first access and mobility management network element;the communication apparatus simultaneously accesses the network by connecting through the first path and a second path connecting the second radio access network device and the second access and mobility management network element.

7. The method according to claim 6, wherein the information used by the second access and mobility management network element to generate a context of the communications apparatus that is different from the first path indicates one of the following:
that the communications apparatus supports simultaneous network access through two different paths; or,
that the communications apparatus wishes to access a network through two different paths, wherein the two different paths are separately connected to two different radio access network devices and two same or different access and mobility management network elements; or,
to create the context of the communications apparatus.

8. A communication method, wherein the method comprises:
accessing, by a communications apparatus, a network through a first path connecting a first radio access network device and a first access and mobility management network element;
sending, by the communications apparatus, a request message to a second access and mobility management network element through a second radio access network device, wherein the request message is used to request to register the communications apparatus with the network, and the request message comprises indication information; and the indication information is used to retain the connection of the first path when the connection of the second path is established, and the second access and mobility management network element and the first access and mobility management network element are the same or different; and
accessing, by the communications apparatus, the network through both the first path and a second path connecting the second radio access network device and the second access and mobility management network element.

9. The method according to claim 8, wherein the indication information indicates one of the following:
that the communication apparatus supports simultaneous access to the network through two different paths, or,
that the communication apparatus desires to simultaneously access the network through two different paths, wherein the two different paths are respectively connected to two different radio access network devices and two identical or different access and mobility management network elements; or,
to retain the connection for the first path in the case of a connection for the second path established.

10. The method according to claim 8 or 9, wherein the request message comprises a registration type, wherein the indication information is a field in the registration type, and the field in the registration type is a dual connection registration.

11. The method according to any one of claims 8 to 10, wherein before the communication apparatus sends a request message to a second radio access network device, the method further comprises:
determining by the communication apparatus, that it wishes to access the network simultaneously through two different paths; the two different paths are respectively connected to two different radio access network devices and two identical or different access and mobility management network elements.

12. The method according to any one of claims 1 to 11, wherein the first path and the second path correspond to an access type of a 3rd Generation Partnership Project 3GPP access type.

13. The method according to any one of claims 1 to 12, wherein the method further comprises:
receiving, by the communication apparatus, first information, wherein the first information is used to indicate a radio access technology RAT type that is allowed for the communication apparatus to access the network.
selecting, by the communication apparatus, based on the first information, a radio access network device corresponding to a radio access technology RAT type that is allowed to access the network by the communication apparatus and registers with the network.

14. The method according to claim 13, wherein the RAT type corresponding to the second radio access network device is included in the RAT types allowed to access the network.

15. The method according to claim 13 or 14, wherein the receiving, by the communications apparatus, first information comprises:
receiving, by the communication apparatus, the first information from the first access and mobility management network element or the second access and mobility management network element.

16. A communication method, wherein the method comprising:
establishing, by an access and mobility management network element, a connection witha communications apparatus through a first path with a first radio access network device.
receiving, by the access and mobility management network element, a request message from the communications apparatus through a second path to a second radio access network device, wherein the request message is used to request to register the communications apparatus with a network, and the request message comprises indication information; and;
retaining, by the access and mobility management network element, a connection of the first path when registering with the network through the second path according to the indication information.

17. The method according to claim 16, wherein the indication information indicates one of the following:
that the communications apparatus supports simultaneous access to the network through two different paths, or,
that the communications apparatus expects to simultaneously access the network through two different paths; and the two different paths are separately connected to two different radio access network devices and two same or different access and mobility management network elements; or,
to retain the connection of the first path when the connection of the second path is established.

18. The method according to claim 16 or 17, wherein the retaining, by the access and mobility management network element, the connection of the first path when registering with the network through the second path according to the indication information comprises:
determining, by the access and mobility management network element, based on the indication information, that the communication apparatus supports simultaneous network access through two different paths, or determines that the communication apparatus desires to simultaneously access the network through two different paths, thereby retaining the connection of the first path when the second path is used to register with the network.

19. The method according to any one of claims 16 to 18, wherein the method further comprises:
obtaining, by the access and mobility management network element, first information, wherein the first information indicates that a radio access technology RAT type allowing the communication apparatus to access the network is permitted.

20. The method according to claim 19, wherein the obtaining, by the access and mobility management network element, first information comprises:
obtaining, by the access and mobility management network element, first information, from a unified data management function or the policy control function.

21. A communication method, wherein the method comprises:
receiving, by a radio access network device, a request message from a communications apparatus, wherein the request message is used to request to register the communications apparatus with a network, and the request message comprises indication information;
obtaining, by the radio access network device, identification information of a first access and mobility management network element; and;
selecting, by the radio access network device based on the identification information of the first access and mobility management network element and the indication information, a second access and mobility management network element different from the first access and mobility management network element.

22. The method according to claim 21, wherein the request message comprises an access network parameter, and the access network parameter comprises the indication information.

23. The method according to claim 22, wherein the identification information of the first access and mobility management network element is obtained from the request message.

24. A communication method, wherein the method comprises:
receiving, by a radio access network device, a request message from a communications apparatus, wherein the request message is used to request to register the communications apparatus with a network, the request message comprises indication information, and the indication information indicates one of the following: that the communications apparatus supports simultaneous access to a network through two different paths; or, that the communications apparatus desires to access the network simultaneously over two different paths;
selecting, by the radio access network device according to the indication information, an access and mobility management network element supporting dual connection, wherein the access and mobility management network element supporting dual connection supports the access and mobility management network element supports simultaneous a connection to the communications apparatus through two different paths.

25. The method according to claim 24, wherein the request message comprises an access network parameter, and the access network parameter comprises the indication information.

26. The method according to claim 24 or 25, wherein the request message further comprises identification information of a first access and mobility management network element, and the method further comprises:
determining, by the wireless access network device, according to the first access and mobility management network element supporting dual connection, whether the first access and mobility management network element supports dual connectionconnection based on the identification information of the first access and mobility management network element;
selecting, by the wireless access network device, according to the indication information, an access and mobility management network element that supports dual connection, comprising:
under the condition that the first access and mobility management network element supports dual connection, the wireless access network device selects the first access and mobility management network element to access the network.

27. A communication apparatus, wherein the communication apparatus comprises a module configured to perform the communication method according to any one of claims 1 to 15.

28. A network element for access and mobility management, wherein the network element for access and mobility management includes a module configured to execute the communication method as described in any one of claims 16 to 20.

29. A wireless access network device, **characterized in that** the wireless access network device includes a module configured to execute the communication method as described in any one of claims 21 to 26.

30. A computer-readable storage medium, wherein the computer-readable storage medium includes computer programs or instructions, and when the computer programs or instructions are run on a computer, the computer is caused to execute the communication method as described in any one of claims 1 to 26.
